(19) Europäisches Patentamt
European Patent Office
Office européen des brevets

(11) **EP 2 504 666 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(21) Anmeldenummer: **10785399.6**

(22) Anmeldetag: **25.11.2010**

(51) Int Cl.:
***G01D 5/244*** *(2006.01)*

(86) Internationale Anmeldenummer:
**PCT/EP2010/068259**

(87) Internationale Veröffentlichungsnummer:
**WO 2011/064317 (03.06.2011 Gazette 2011/22)**

(54) **KALIBRIERVERFAHREN UND WINKELMESSVERFAHREN FÜR EINE WINKELMESSEINRICHTUNG SOWIE WINKELMESSEINRICHTUNG**

CALIBRATION METHOD AND ANGLE MEASUREMENT METHOD FOR ANGLE MEASURING DEVICE AND ANGLE MEASURING DEVICE

PROCÉDÉ DE CALIBRAGE ET PROCÉDÉ DE MESURE D'ANGLE POUR UN DISPOSITIF DE MESURE D'ANGLE, AINSI QUE DISPOSITIF DE MESURE D'ANGLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2009 EP 09177211**

(43) Veröffentlichungstag der Anmeldung:
**03.10.2012 Patentblatt 2012/40**

(73) Patentinhaber: **Leica Geosystems AG**
**9435 Heerbrugg (CH)**

(72) Erfinder:
• LIPPUNER, Heinz
CH-9445 Rebstein (CH)
• VOKINGER, Urs
CH-9434 Au (CH)
• SIERCKS, Knut
CH-9402 Mörschwil (CH)

(74) Vertreter: **Kaminski Harmann**
**Patentanwälte AG**
**Landstrasse 124**
**9490 Vaduz (LI)**

(56) Entgegenhaltungen:
**EP-A1- 1 944 582     DE-A1- 4 009 593**

• **RALF D GECKELER ET AL: "Calibration of angle encoders using transfer functions", MEASUREMENT SCIENCE AND TECHNOLOGY, IOP, BRISTOL, GB LNKD-DOI:10.1088/0957-0233/17/10/036, Bd. 17, Nr. 10, 1. Oktober 2006 (2006-10-01), Seiten 2811-2818, XP020103247, ISSN: 0957-0233**

**Beschreibung**

Die Erfindung betrifft ein Kalibrierverfahren und Winkelmessverfahren für eine Winkelmesseinrichtung nach dem Oberbegriff des Anspruchs 1 bzw. 11 sowie ein Computerprogrammprodukt nach dem Oberbegriff des Anspruchs 15 zur Durchführung der Verfahren und eine Winkelmesseinrichtung nach dem Oberbegriff des Anspruchs 14 und, mit dessen Hilfe eine Vielzahl systematischer Messfehler kompensierbar sind.

Winkelmesssysteme sind in verschiedensten Ausführungsformen seit vielen Jahren bekannt. Sie finden im Maschinen- und Anlagenbau ebenso Anwendung wie in unterschiedlichsten Messgeräten, beispielsweise in geodätischen Geräten, Koordinatenmessgeräten oder Robotern. Bei deren Anwendung stellt sich die Aufgabe die Winkelabweichung oder entsprechende, davon abgeleitete Grössen, wie beispielsweise Geschwindigkeit oder Beschleunigung, zwischen zwei gegeneinander in einem Freiheitsgrad drehbaren Teilsystemen zu bestimmen.

Beispielsweise werden solche Winkelmesssysteme in Koordinatenmessgeräten wie z.B. Articulated Arms zur Ermittlung der Winkelpositionen in den einzelnen Gelenken verwendet, aus welchen in Folge die Raumposition eines am Ende des Arms angebrachten Tastelementes berechnet wird.

Auch sind solche Winkelmesser in geodätischen Messgeräten, wie beispielsweise einem Theodoliten verbaut, mit welchen verschiedenste Vermessungsaufgaben, wie beispielsweise die Bestimmung von Horizontal- und Vertikalwinkel, durchgeführt werden.

Ebenso sind solche Winkelmesssysteme in Anlagen und Maschinen zu finden, um die Stellungen von Maschinenkomponenten wie Antrieben, Schwenkköpfen, Drosselklappen, Drehtischen, und ähnlichem zu Erfassen. Die dabei erfassten Stellungen können als Positionswerte zu Vermessungszwecken genutzt werden, oder auch für eine Positionierung von Komponenten durch einen Antrieb mit Positionsregelkreis.

Ein Winkelmesssystem ist aus zwei, in einem Freiheitsgrad gegeneinander beweglichen, Teilsystemen aufgebaut. Das erste Teilsystem trägt einen Positionscode, welcher von einem am zweiten Teilsystem angebrachten Lesekopf ganz oder teilweise erfasst wird. Durch Auswertung der Signale des Lesekopfs kann somit eine Auswerteeinheit die Position der beiden Teilsysteme zueinander bestimmen. Falls es sich bei dem Positionscode um einen Absolutcode handelt, ist zumindest abschnittsweise ein eindeutiger Winkelpositionswert der beiden Teilsysteme zueinander bestimmbar. Häufig wird hierbei eine Codetabelle zur Umsetzung des Positionscodes in einen Winkelpositionswert verwendet.

Eine Vielzahl der heute verfügbaren Winkelmesssysteme beinhaltet mehrere Leseköpfe zur Bestimmung der Winkelpositionswerte mit erhöhter Messgenauigkeit, indem beispielsweise durch eine Mittelwertbildung der einzelnen Winkelpositionswerte die nicht systematischen Fehler, wie beispielsweise Signalrauschen, reduziert werden. In anderen Anwendungen können mehrere Leseköpfe auch zur Vermeidung von fehlerhaften Messwerten durch Redundanz genutzt werden.

Bedingt durch die systematische Natur einer Vielzahl der auftretenden Fehler, werden diese durch eine solche Mittelung nicht hinreichend korrigiert. Insbesondere Fehler, welche harmonisch bezüglich einer vollen Umdrehung sind, speziell harmonische Fehler niedriger Ordnungen wie sie beispielsweise bei Drehgebern durch Exzentrität, Lagerfehler, Codeteilungsfehler, etc., entstehen, haben in der Praxis oft einen grossen Anteil am Gesamtfehler. Daher ist es besonders von Interesse diese zu erfassen und den Messwert entsprechend zu korrigieren. Hierzu sind verschiedenste Möglichkeiten einer Kalibrierung des Winkelmessers bekannt.

Zur Kalibrierung von hochgenauen Winkelmesseinrichtungen werden höchstpräzise Kalibriervorrichtungen benötigt, deren Genauigkeit deutlich höher liegen muss als die der zu kalibrierenden Prüflinge. Daher sind solche Vorrichtungen recht aufwändig in der Herstellung und somit Kostenintensiv. Oft ist der Vorgang der Kalibrierung auch mit sehr hohem Zeit- und Arbeitsaufwand verbunden. Es wird daher versucht, diesen Vorgang so weit als möglich zu automatisieren und auf teure Vorrichtungen zu verzichten.

In der Veröffentlichung EP 0 440 833 B1 wird daher eine Winkelmesseinrichtung beschrieben, bei welcher mit Hilfe von mehreren Leseköpfen, anhand einer diskreten rekursiven Berechnung, systematische Fehler erfasst und korrigiert werden. Hierbei wird zur vollständigen Korrektur der Fehler über den gesamten Messbereich, bedingt durch die inkrementelle Codierung, entweder eine große Anzahl von Leseköpfen benötigt oder es muss mit einem externen Referenzsystem gearbeitet werden, welches bekannte Positionen von aussen vorgibt. In der Praxis stösst eine solche Rekursivrechnung, bedingt durch die Fehlerfortpflanzung und der immer vorhandenen Rauschanteile, auch bald an Grenzen bezüglich der erreichbaren Genauigkeit.

Aus DE 11 2006 003 663 T5 ist die Entwicklung der Winkelfehler in eine Fourier-Reihe bekannt, welche besonders zur Beschreibung und Korrektur von harmonischen Fehlern eines Drehgebers über den gesamten Messbereich von 360° geeignet ist. Mit dem dabei verwendeten einzelnen, geteilten Lesekopf können harmonische Winkelfehler höherer Ordnung genau bestimmt werden. Da bei der verwendeten Fourier-Analyse zur genauen Bestimmung niedriger Harmonischer der geringe Winkel, welcher der geteilte Lesekopf abdeckt, unzureichend ist, werden erst durch eine vorbestimmte externe Positionierung der Teilsysteme zueinander auch diese Fehler niedriger Ordnung genau bestimmbar gemacht. Beispielsweise sind zur Bestimmung der ersten Harmonischen mit einer Fourier-Zerlegung Messungen an möglichst gegenüberliegenden Positionen vorteilhaft, da somit diese erste Harmonische zu einem hohen Anteil und daher auch mit entsprechend gutem Signal-Rauch-Verhältnis bestimmbar ist (siehe Gleichung 1 nachfolgend). Hierzu ist allerdings in dieser Offenbarung eine externe Referenz nötig, welche den Geber in vorbestimmten Stellungen positioniert, um auch die niedrige Harmonische mit hinreichender Genauigkeit bestimmbar zu machen.

Die Schrift EP 1 944 582 A1 zeigt eine Verfahren, welches zur Bestimmung wenigstens einer Einflussgrosse auf die Exzentrizität in einem Winkelmesser mit einer Detektoranordnung aus vier optischen Detektorelementen, einem rotierbaren Drehkörper mit einer Vielzahl um ein Musterzentrum angeordneter Musterelementen, welche wenigstens teilweise auf die Detektoranordnung abgebildet werden, die Positionen auflöst und die Exzentrizität des Musterzentrums relativ zu einem Detektorzentrum der Detektoranordnung bestimmt. Die dabei verwendete Anordnung der vier Detektoren ist symmetrisch, mit einer gleichmässigen Aufteilung der Detektoren entlang des Umfangs des Drehkörpers, wodurch beispielsweise die vierte Harmonische nicht bestimmbar ist.

Das Dokument DE 103 57 602 A1 beschreibt ebenfalls einen Winkelgeber, bei welchem während des Kalibriervorgangs an extern vorbestimmten Winkelpositionen die Differenz des Messwertes zur von extern vorbestimmten Winkelposition bestimmt und in eine Fourier-Reihe entwickelt wird. Die Reihenkoeffizienten werden gespeichert und diese einmal gespeicherten Koeffizienten werden fortan zur Korrektur der Messwerte herangezogen. Auch hierbei ist eine Kalibrierung nur mit Hilfe einer externen Referenz möglich.

In dem Artikel "Self Calibrationg Rotary Encoder" von Tsukasa Watanbe et all, welcher im Journal of Physics, Series 13, 2005 auf Seite 240-245 publiziert wurde, wird ein selbstkalibrierender Drehgeber beschreiben, welcher mit mehreren äquidistant am Umfang angeordneten Leseköpfen arbeitet.

In der Zeitschrift "Measurement Science and Technology" Ausgabe 19, 2008 wird von R. Probst im Artikel "Selfcalibration of divided circles on the basis of a prime factor algorithm" wird eine Selbstkalibrierung von Teilkreisen unter Anwendung einer Primfaktorenzerlegung für eine diskrete Fourier-Transformation beschrieben.

Nachteilig bei den bekannten Verfahren ist, dass die Fehlerkorrektur, insbesondere der harmonischen Fehler niedriger Ordnungen, nur mit Hilfe einer von außen vorgegebenen Positionierung des Winkelmesssystems mit hinreichender Genauigkeit bestimmt werden können. Somit ist eine Kalibrierung zur Reduktion dieser Fehler nur mit externen Hilfsmitteln möglich. Dies verkompliziert die Kalibrierung erheblich, insbesondere nach dem Einbau des Winkelmessers in ein Gerät.

Darüber hinaus besteht auch keine einfache Möglichkeit zur erneuten Kalibrierung des fertigen Geräts, um beispielsweise auf sich ändernde Umgebungsbedingungen oder auf potentielle Fehlerquellen wie Schlag- und Stossbeanspruchungen reagieren zu können, da eine hochgenaue externe Positionierung des im Gerät verbauten Gebers oft schwierig oder gar unmöglich ist.

Vor diesem Hintergrund stellt sich daher die allgemeine Aufgabe die Winkelgenauigkeit eines Winkelmesssystems zu verbessern indem durch eine Kalibrierung vorhandene Fehler kompensiert werden.

Eine spezielle Aufgabe ist es daher ein Kalibrierverfahren mit verbesserter Fehlerkompensation bereitzustellen.

Insbesondere ist es eine Aufgabe ein Kalibrierverfahren bereitzustellen, welches referenzsystemfrei arbeitet und mit welchem ohne jegliche externe Hilfsmittel und Winkelvorgabe eine Kalibrierung durchführbar ist. Ein mit und für ein solches Kalibrierverfahren ausgestattetes Winkelmesssystem bietet somit die Möglichkeit, jederzeit ohne Vorhandensein einer aufwändigen Kalibriereinheit, für sich alleine kalibriert zu werden. Im Weiteren wird eine solche referenzsystemfreie Kalibrierung ohne externe Hilfsmittel auch als Selbstkalibrierung bezeichnet.

Eine spezifische Aufgabe der Erfindung ist es dabei auch eine Fehlerkorrektur mit hoher Genauigkeit zu erreichen, besonders für die dominantesten Fehler des Winkelmesssystems, welche insbesondere bei Winkelmessern häufig in Form eines zu einer vollen Umdrehung harmonischen Fehlers mit niedriger Ordnung auftreten.

Dabei sollten weiters auch möglichst wenige Leseköpfe verwendet werden, um die Kosten, Komplexität und Fehleranfälligkeit des Winkelmesssystems gering zu halten.

Auch der Energiebedarf eines Winkelmesssystems sollte, besonders bei mobilem Einsatz, möglichst gering gehalten werden, um beispielsweise eine lange Betriebszeit eines batteriebetriebenen geodätischen Messgerätes gewährleisten zu können. Es ist daher eine weitere Aufgabe, möglichst wenige Leseköpfe und einen möglichst nicht rechenintensiven Korrekturalgorithmus zu verwenden. Weniger Leseköpfe und ein einfaches Korrekturverfahren ermöglichen zudem eine höhere Auswertegeschwindigkeit des Messsystems und somit den Vorteil einer kürzeren Messzeit für den Benutzer.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Der erfindungsgemässe Winkelmesser löst diese Aufgaben durch die erfindungsgemässe Anordnung mehrerer, eine Absolutposition bestimmender Leseköpfe und einem dazugehörigen Verfahren zur Bestimmung von Fehlerkoeffizienten und einem Verfahren zur Korrektur des Messwerts anhand der Fehlerkoeffizienten.

Dabei wird durch entsprechende Anordnung der Leseköpfe und eine absolute Codierung eine genaue Bestimmung der harmonischen Fehler, besonders der oft dominanten harmonischen Fehler niedriger Ordnungen, alleine durch das Winkelmesssystem selbst ermöglicht. Diese bestimmten Fehler können in Folge anhand des beschriebenen Korrekturverfahrens bei der Ermittlung eines Messwertes berücksichtigt werden und somit kann ein korrigierter Messwert zur weiteren Verarbeitung ausgegeben werden.

Harmonische Fehler können beispielsweise von Exzentritäten bei der Montage, schlechter Lagerung, schräger Montage, Teilungsfehler der Codescheibe, Taumeln der Codescheibe, thermischem oder mechanischem Verzug, Dejustierung der Codescheibe, Alterungserscheinungen oder anderen Umständen herrühren.

In der Praxis sind dabei oft Harmonische mit niedrigen Ordnungen, beispielsweise bis zur 10. oder 15. Ordnung, anteilsmässig dominierend. Es gilt daher auch besonders diese möglichst genau zu erfassen, da diese den grössten Anteil am Gesamtfehler haben. Bei Winkelgebern liefern dabei speziell die dominanten Winkelfehler als Harmonische bis zumindest zur achten Ordnung einen signifikanten Fehleranteil, und sollten daher in der qualifizierenden mathematischen Funktion bzw. Reihe mit hoher Genauigkeit enthalten sein, zumindest mit einem Signal zu Rausch Verhältnis von mindestens 25%.

Das verwendete Winkelmesssystem setzt sich aus zumindest zwei gegeneinander in einem Freiheitsgrad beweglichen Teilsystemen zusammen. Das erste dieser Teilsysteme trägt dabei einen Positionscode, das zweite Teilsystem ist mit zumindest zwei Leseköpfen zum Erfassen des Positionscodes oder eines Teiles davon, ausgestattet. Alternativ können auch mehrere, miteinander verbundene Teilsysteme mit jeweils einem oder mehreren Leseköpfe vorhanden sein. Jedenfalls muss die Anordnung oder die Bauart der Leseköpfe dazu geeignet sein, den Positionscode an zumindest zwei unterschiedlichen Winkellagen zu erfassen.

Die zumindest zwei Leseköpfe sind gegeneinander in einem fixen, bekannten Winkelabstand angebracht. Die Winkellagen sind derart gewählt, dass sich zumindest einer der Winkelabstände zwischen zwei benachbarten Leseköpfen von den übrigen Winkelabständen unterscheidet, insbesondere wobei die Leseköpfe Winkelabstände von mehr als 50 Grad relativ zueinander aufweisen können.

Es ist ebenso ein Lesekopf mit länglichem oder zweidimensionalem Sensor anwendbar, wenn mit diesem der Positionscode erfindungsgemäss in zumindest zwei Winkellagen auslesbar ist, welche insbesondere mit einem Winkel von zumindest 50 Grad zueinander beanstandet sind. Hierdurch kann beispielsweise auch durch einen einzelnen physischen Lesekopf die hier beschriebenen zwei oder mehr Leseköpfe im Sinne der Erfindung realisiert werden.

Bei dem Positionscode handelt es sich um einen absoluten Positionscode, aus welchem sich eine absolute Winkelposition des Lesekopfs am dem Umfang des Codeträgers bestimmen lässt. Neben der Ausführung als Codescheibe, sind auch Drehgeber mit Codeträger bekannt, bei welchen die Winkelteilung auf aufgewickelten Bändern angebracht ist und der Positionscode von diesen Bändern gelesen wird.

Die Codierung des Codeträgers kann beispielsweise in Form einer Codespur mit serieller Absolutcodierung (z.B. mit einer Maximalfolge) oder mehrerer Codespuren anhand welcher die Position absolut bestimmbar ist (z.B. mit mehren parallelen Codespuren, welche eine binäre Positionscodierung darstellen) ausgeführt sein. Es ist auch möglich lediglich eine nur teilweise ausgeführte Absolutcodierung, welche durch eine dazwischenliegende Relativcodierung ergänzt wird, zu verwenden.

Die Winkellagen, an welchen die Leseköpfe den Positionscode erfassen, haben direkten Einfluss auf die Bestimmbarkeit der Harmonischen. Abhängig vom Winkelabstand der Leseköpfe zueinander - im Weiteren mit $\Delta$ bezeichnet - ergeben sich die Bewertungs-Faktoren der Harmonischen nach der Formel:

$$(0.1) \quad a_h = 2 \cdot A_h \cdot \sin\left(\frac{h \cdot \Delta}{2}\right),$$

Bei mehr als zwei Leseköpfen können dabei selbstverständlich beliebige Permutationen der Leseköpfe zur Bestimmung der Differenzen genutzt werden.

Wie bereits zuvor beschrieben, lässt sich beispielsweise die erste Harmonische durch eine Differenz der Winkellagen von 180° besonders vorteilhaft bestimmen. Jedoch ist bei einer solchen Anordnung beispielsweise die zweite Harmonische gar nicht bestimmbar.

Bei geringen Winkeln unter 50 Grad zwischen den Leseköpfen lassen sich die Harmonischen erster und zweiter Ordnung nur mit niedrigen Bewertungsfaktoren, meist unter 50%, bestimmen. Da eine Vielzahl von systematischen Fehlern jedoch genau mit dieser niedrigen Periodizität auftritt, können diese mit Lesekopfabständen unter 50 Grad nur sehr eingeschränkt mit der für eine Präzisionsmessung erforderlichen Genauigkeit referenzsystemfrei bestimmt werden.

Aus den Winkelpositionswerten, welche durch Auswertung der Leseköpfe an den Lagen ermittelt werden, werden durch eine Reihen-Entwicklung, insbesondere durch eine Fourier-Reihen-Entwicklung in der Form:

$$(0.2) \qquad \tilde{\Theta}_k = \Phi + \Omega_k + \varepsilon_k\left(\Theta_k\right) = \Theta_k + \eta + \sum_{h=1}^{H} A_{h,k} \cdot \cos\left(h \cdot \Theta_k + \varphi_{h,k}\right)$$

die Winkelfehler der Winkelpositionswerte als harmonische Oberschwingungen in Form von Koeffizienten dieser Reihe dargestellt.

Der Ansatz beschreibt den Winkelfehler an einem Lesekopf k eines Winkelmesssystems mit K Köpfen, die gegenüber einem Referenzwinkel, auf dem idealen Referenzsystem, an den Winkellagen $\Omega_k$ fest montiert sind, und $\Phi$ der Winkel des idealen Referenzsystems ist. Die Abweichung

$$(0.3) \qquad \varepsilon\left(\Theta_k\right) = \eta_k + \sum_{h=1}^{H} A_{h,k} \cdot \cos\left(h \cdot \Theta_k + \varphi_{h,k}\right)$$

des Winkelpositionswerts $\tilde{\Theta}$ vom idealen Sollwinkel des Referenzsystems

$$(0.4) \qquad \Theta_k = \Phi + \Omega_k$$

wird in Gleichung (0.2) durch die Summe von Cosinus-Termen und/oder Sinus-Termen entsprechend einer Fourier-Entwicklung und eines Rauschterms $\eta_k$ beschrieben. Wird nun die Winkellage zwischen zwei beliebigen Leseköpfen

$$(0.5)$$

$$\tilde{\Theta}_k - \tilde{\Theta}_f = \Theta_k + \eta_k - \left(\Theta_f + \eta_f\right) + \sum_{h=1}^{H} A_{h,k} \cdot \left(\cos\left(h \cdot \Theta_k + \varphi_{h,k}\right) - \cos\left(h \cdot \Theta_f + \varphi_{h,f}\right)\right)$$

berechnet, so können die Koefizienten $A_{k,h}$ der Harmonischen durch ein Optimierungsverfahren ermittelt werden. Dazu wird

$$(0.6) \qquad \Theta_k - \Theta_f = a_{k,0} - a_{f,0}$$

als Harmonische nullter Ordnung und

$$(0.7) \qquad \tilde{\Theta} \approx \Theta.$$

in Gleichung (0.5) eingeführt; letzteres aufgrund der zu erwartendem kleinen Amplitude von $\varepsilon$.

Somit gilt für Gleichung (0.5)

$$(0.8) \qquad \vartheta_{k,l} = \eta_k - \eta_f + \sum_{h=0}^{H} A_{h,k} \cdot \left(\cos\left(h \cdot \tilde{\Theta}_k + \varphi_{h,k}\right) - \cos\left(h \cdot \tilde{\Theta}_f + \varphi_{h,f}\right)\right)$$

Mit einer Ausgleichsrechnung können die Werte von $a_{h,k}$, $\varphi_{h,k}$ und $\varphi_{h,f}$ bestimmt und somit die Funktion $\varepsilon$ rekonstruiert werden. Damit können die Winkelfehler aller Winkelstellungen mit zwei Winkelköpfen geschätzt werden. Meistens genügt die Berechung der zumindest ersten acht oder elf Harmonischen um eine hohe Winkelgenauigkeit zu erreichen. Das Verfahren lässt sich auf eine beliebige Anzahl von Winkelköpfen erweitern, und damit wird auch die Schätzung verbessert.

Die Winkelköpfe können gezielt für die Messung bestimmter Harmonischer montiert werden ($\Omega_k$). So ist z.B.

$$\Delta_{k,f} = \Omega_k - \Omega_f = 45\ Grad \qquad (0.9)$$

optimal zur Messung der vierten Harmonischen. Andere Harmonische können auch mit dieser Winkellage der Leseköpfe bestimmt werden, jedoch mit einem schlechteren Signal-zu-Rausch-Verhalten als bei einer optimalen Winkellage.

Grundsätzlich gilt der Zusammenhang

$$a_h = 2 \cdot A_h \cdot \sin\left(\frac{h \cdot \Delta}{2}\right), \qquad (0.10)$$

wobei $A_h$ die wirkliche Amplitude der $h$-ten Harmonischen ist, $a_h$ die gemessene Amplitude der $h$-ten Harmonischen ist und $\Delta$ der eingeschlossene Winkel zwischen den betrachteten Leseköpfen.

Beispielsweise wird die vierte Harmonische bei einer 45 Grad Winkellage mit der Amplitude $a_4 = 2.A_4$ gemessen. Die achte Harmonische kann aber mit dieser Anordnung überhaupt nicht detektiert werden, da $a_8 = 0$ ist. Als weiteres Beispiel kann mit dieser Winkellage der Leseköpfe die sechste Harmonische mit einer Amplitude von $a_6 = 1.41.A_6$. bestimmt werden.

Die radiale Bewegung der Codescheibe geht in die Berechung der Harmonischen voll ein. Dies kann im Falle eines schlechten Lagers zu hohen Rauschanteilen in den Winkelpositionswerten der einzelnen Köpfe führen (höhere Wert $\eta$). Wird zu jedem Winkelkopf ein diametral gegenüber liegender, weiterer Winkelkopf montiert und wird für $\Theta_k$ der Mittelwert dieser Kopfpaare eingesetzt, so heben sich die radialen Bewegungen auf und erscheinen in der Auswertung von Gleichung (0.8) nicht mehr als Rauschen.

Ein Vorteil des Verfahrens ist auch, dass die Fehlerfunktion $\varepsilon$ kontinuierlich ist und nicht diskret wie dies häufig im Stand der Technik der Fall ist.

Ein derart ermittelter Satz von Koeffizienten wird gespeichert. Dieser Koeffizientensatz kann für eine fortlaufende Online-Korrektur in Form einer Berechnung eines korrigierten Messwertes anhand der Koeffizienten während des Messvorgangs verwendet werden. Alternativ kann mit dem Koeffizientensatz auch eine Codetabelle des Winkelmessers korrigiert und diese gespeichert werden oder eine separate Korrekturtabelle erstellt und gespeichert werden. Die beiden Alternativen bieten den Vorteil eines geringeren Rechenaufwandes während der Messung, benötigen aber mehr Speicherplatz.

Um eine vollständige Kalibrierung durchzuführen, muss der Winkelmesser lediglich entlang seines Messbereichs bewegt werden. Es sind im Gegensatz zum Stand der Technik keine vorbestimmten Positionen anzufahren. Es ist weiters ausreichend, den Winkelgeber zur Kalibrierung um weniger als eine volle Umdrehung zu bewegen. Der minimale abzufahrende Weg zur Kalibrierung ergibt sich aus den Winkellagen der Leseköpfe.

Ein weiteres Bewegen, über den minimal zur Kalibrierung nötigen Weg hinaus, führt zu redundanten Daten. Anhand solcher redundanten Daten können, beispielsweise mittels einer Mittelung oder Ausgleichsrechnung, bei den Werten der Winkelfehler oder Reihenkoeffizienten zusätzlich auch nicht systematische Anteile reduziert werden und somit die Genauigkeit der Kalibrierung weiter verbessert werden.

Anhand des ermittelten Koeffizientensatzes wird in Folge bei einer Messung der Messwert korrigiert, und somit können die durch die Koeffizienten abgebildeten harmonischen Fehler ausgeglichen werden. Alternativ kann auch eine Codetabelle des Absolutwertgebers anhand der Koeffizienten modifiziert werden, um die Fehler direkt dort auszugleichen und den Berechnungsaufwand bei der Messwertbestimmung zu reduzieren. Die Koeffizienten oder die modifizierte Codetabelle werden vom Winkelgeber bzw. von dessen Auswerteeinheit entweder flüchtig oder nichtflüchtig gespeichert. Ein flüchtiges speichern erfordert eine erneute Kalibrierung bei jedem Einschalten oder Reset des Systems, was jedoch aufgrund des einfach auszuführenden Kalibrierungsverfahrens auch von einem Laien jederzeit durchgeführt werden kann.

Da für eine erfindungsgemässe Kalibrierung keine externen Hilfsmittel und Referenzen benötigt werden, kann die Kalibrierung jederzeit und jederorts durchgeführt werden, beispielsweise:

- bei der Assemblierung des Winkelmesssystems,

- beim Einbau des Winkelmesssystems in ein Gerät,

- einmalig bei der Inbetriebnahme des Gerätes,

- bei jedem einschalten des Gerätes,

- in vorgegebenen zeitlichen Abständen,

- bei Änderung der Umgebungsbedingungen,

- nach mechanischen Stössen, Stürzen oder Erschütterungen,

- fortlaufend während des Messbetriebes unter Berücksichtigung von Kalibrierparametern, welche während des Messbetriebs bestimmt wurden und/oder von Kalibrierparametern, welche bei einer früheren Kalibrierung bestimmt und gespeichert wurden.

Wobei insbesondere eine Kalibrierung unmittelbar vor der Messung im Feld besonders vorteilhaft ist, da somit der aktuelle Zustand und die Umbebungsbedingungen des Messgerätes Berücksichtigung finden.

Anhand der Kalibrierparameter lässt sich auch ein Schätzwert für die Genauigkeit des Messsystems bestimmen um das Messsystem qualitativ zu beurteilen bzw. kann sich das Messsystem bezüglich der von ihm erreichbaren Genauigkeit selbst einschätzen und diese Information zur weiteren Verarbeitung bereitstellen. Auch können die Kalibrierparameter durch das Gerät überwacht werden und es ist eine Warnung bzw. ein Hinweis auf einen möglichen Genauigkeitsverlust, eine nötige Wartung oder sonstige Probleme ausgebbar, falls eine unerwartet starke Änderung der Koeffizienten gegenüber früheren Werten auftritt - beispielsweise hervorgerufen durch eine Dejustierung eines Lesekopfes oder des Codeträgers.

Während der Messung kann bei Bedarf auch ein oder mehrere Messköpfe deaktiviert oder gar entfernt werden. Nach dem Ermitteln der Koeffizienten oder der korrigierten Codetabelle ist ein Lesekopf zur Bestimmung eines Werts, der anhand der Kalibrierung korrigiert wird, ausreichend. Mehrere Messköpfe ermöglichen jedoch auch hier eine vorteilhafte Interpolation oder Mittelwertbildung zur weiteren Erhöhung der Messgenauigkeit.

An die Genauigkeit der bekannten Winkellagen der Leseköpfe zueinander wird für die erfindungsgemässe Selbstkalibrierung keine besondere Anforderung gestellt, da diese im Zuge der Kalibrierung des Winkelmesssystems anhand der Differenz zwischen den absoluten Winkelpositionswerten der Leseköpfe in einer beliebigen Winkelstellung als Referenzwinkelstellung ermittelbar ist. Bei dieser Ermittlung kann beispielsweise auch eine Mittelung von mehreren Lesewerten, auch in unterschiedlichen Winkelstellungen, zur Fehlerreduktion angewendet werden. Der Winkelabstand der Leseköpfe zueinander - bzw. die bekannten Winkellagen der Leseköpfe - kann daher vor der Kalibrierung durchaus nur näherungsweise, allenfalls auch gar nicht bekannt sein und erst im Zuge des Kalibrierverfahrens bestimmt werden. Es ist somit bei dem Begriff "bekannt" auch die implizite Bekanntheit aufgrund der Bestimmbarkeit mit eingeschlossen.

Die Winkellagen der Leseköpfe müssen jedoch während der Ermittlung des Koeffizientensatzes unverändert bleiben, wovon bei Leseköpfen, welche fest in einem Gerät montierten sind in hohem Masse ausgegangen werden kann. Aufgrund des geschlossenen als geschlossen anzusehenden Winkelkreises kann ein Winkelabstand zweier Leseköpfe mit mehr als 180 Grad auch über den Komplementärwinkel beschrieben werden. Beispielsweise wird ein Winkelabstand von mehr als 180 Grad in den hier beschriebenen Ausführungen in die andere Richtung gemessen und somit kann der maximal mögliche Winkelabstand auch als 180 Grad und nicht 360 Grad angesehen werden.

Ein weiterer Vorteil des erfindungsgemässen Verfahrens ist, dass durch die fest platzierten Leseköpfe eine stabilere Winkellage zu erreichen ist, als dies bei einer externen Positionierung des Winkelgebers möglich ist, da eine Positionierung systembedingt immer sowohl absolute Positionierfehler als auch Reproduzierbarkeitsfehler aufweist.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Figur 1a      eine Ausführungsform eines erfindungsgemäßen Winkelmesssystems mit zwei in einem Winkel Δ von 150° zueinander angeordneten Leseköpfen,

Figur 1b      beispielhaft eine tabellarische Darstellung der Bewertungsfaktoren mit welchen Harmonische mit der in Figur 1a dargestellten Anordnung bestimmt werden können,

Figur 2      eine Ausführungsform eines erfindungsgemäßen Winkelmesssystems mit zwei jeweils diametral angeordneten Lesekopf-Paaren,

Figur 3a      eine Ausführungsform eines erfindungsgemässen Winkelmesssystems mit zwei gegenüberliegend angeordneten Leseköpfen, und einem weiteren, einzelnen Lesekopf

Figur 3b      eine Ausführungsform eines erfindungsgemässen Winkelmesssystems mit zwei diametral angeordneten Leseköpfen, und zwei weiteren Leseköpfen in unterschiedlichen Winkellagen,

Figur 4      ein Ablaufdiagramm des Kalibrierverfahrens und des Winkelmessverfahrens,

Figur 5      ein Ablaufdiagramm des Kalibrierverfahrens und des Winkelmessverfahrens bei fortlaufender Kalibrierung,

Figur 6a      beispielhaft die Verwendung mehrerer erfindungsgemäßen Winkelmesssysteme in einem articulated Arm und

Figur 6b      beispielhaft die Verwendung von zwei erfindungsgemäßen Winkelmesssystemen in einem geodätischen Messgerät.

Figur 7      beispielhaft eine Darstellung der Fehler eines Winkelmessers als Fourier-Reihe,

Figur 8      eine beispielhafte Ausführungsform eines erfindungsgemässen Winkelmesssystems mit optoelektronischen Leseköpfen,

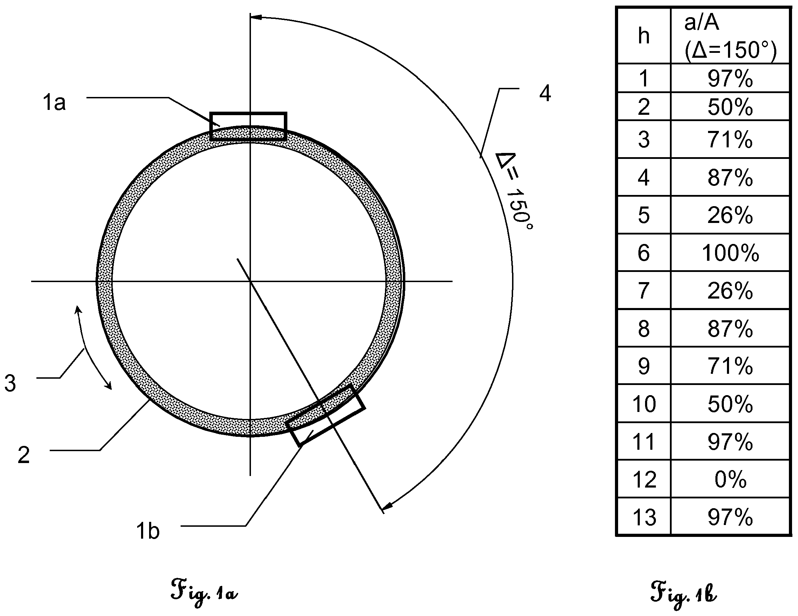

In Figur 1a ist eine mögliche Ausführungsform des erfindungsgemäßen Winkelmesssystems in schematischer Darstellung zu sehen.

Es wird ein Winkelmesssystem 7 mit

- einem Codeträger 2, welcher einen absoluten Positionscode trägt,
- zumindest zwei Leseköpfen 1a, 1b, die eine fixe, bekannte Winkellage 4 mit einem Winkelabstand, insbesondere von mehr als 50 Grad, beispielsweise von 70 bis 180 Grad, vorzugsweise von 140 bis 170 Grad, beispielsweise von 150 Grad, relativ zueinander aufweisen und jeweils zum zumindest teilweisen Erfassen des Positionscodes geeignet sind, sodass ein absoluter Winkelpositionswert des jeweiligen Lesekopfes 1a, 1b relativ zum Codeträger 2 bestimmbar ist und wobei der Codeträger 2 gegenüber den Leseköpfen 1a, 1b drehbar ist und somit unterschiedliche Winkelstellungen 3 des Codeträgers 2 gegenüber den Leseköpfen 1a, 1b einnehmbar sind und
- einer Auswerteeinheit zur Durchführung des erfindungsgemäßen Kalibrierverfahrens und/oder des erfindungsgemäßen Winkelmessverfahrens, welche nicht dargestellt ist.

Es sind zwei Leseköpfe 1a und 1b zum Erfassen des Positionscodes, welcher sich auf dem Codeträger 2 befindet, dargestellt. Diese sind beispielhaft in einer Winkellage 4 von 150° zueinander beabstandet angeordnet. Eine hier nicht dargestellte Auswerteeinheit bestimmt jeweils anhand des zumindest teilweise vom Lesekopf 1a, 1b erfassten Positionscodes einen Winkelpositionswert, welcher von der Stellung des Codeträgers 2 gegenüber dem Lesekopf 1a, 1b abhängt. Wie durch den Pfeil 3 zur Veranschaulichung angedeutet, ist die Codescheibe 2 gegenüber den Leseköpfen 1a, 1b in einem Freiheitsgrad drehbar gelagert.

Die Leseköpfe 1a und 1b sind dabei so ausgebildet, dass deren Winkelpositionswert gegenüber dem Codeträger 2 absolut innerhalb einer Umdrehung oder eines Teils einer Umdrehung bestimmbar ist. Die Winkellage 4 der Leseköpfe 1a und 1b zueinander beträgt in diesem Ausführungsbeispiel wie angegeben 150°. Folglich macht im idealen, fehlerfreien Fall auch die Differenz der Winkelpositionswerte der Leseköpfe 1a und 1b 150° aus. Praktisch lässt sich anhand eines Vergleichs der Differenz der Winkelpositionswerte mit der Winkellage ein Winkelfehler bestimmen.

Durch Verdrehen der Codescheibe 2 gegenüber den Leseköpfen 1a, 1b wird die Winkelstellung variiert. Dabei wird der Winkelfehler für eine Vielzahl von Winkelstellungen bestimmt. Vorzugsweise geschieht dies annähernd gleichverteilt über die Winkelstellungen des gesamten Messbereichs. In Idealfall würde dies für jede Winkelstellung an der ein unterschiedlicher Winkelpositionswert bestimmbar ist durchgeführt werden, was aber in der Praxis nur schwer realisierbar und für das Verfahren auch nicht gefordert ist. Es ist hinreichend lediglich Teilbereiche des Messbereichs mit einer definierten Dichte abzudecken, um das Kalibrierverfahren durchzuführen.

Die dabei erhaltenen Winkelfehler werden z.B. in eine mathematische Reihe entwickelt. beispielsweise eignet sich hierfür eine Fourier-Reihe, da deren Koeffizienten Harmonische einer Grundperiode darstellen und sich diese daher in hohem Maße zur Abbildung von Fehler eines Drehgebers, welche periodisch bezüglich einer Umdrehung sind, anbieten.

Alternativ zu einer Fourier-Reihe, auf welche beispielhaft zur Erläuterung des Verfahrens in der weiteren Beschreibung genauer eingegangen wird, sind ebenso andere mathematische Funktionen, Reihen und Modelle zur Qualifizierung der Winkelfehler anwendbar. Die Parameter dieser allgemeinen Funktion entsprechen dann in ihrer Funktion den in der Beschreibung aufgeführten Koeffizienten der Harmonischen der Fourier-Reihe und können beispielsweise durch eines der vielen bekannten Parameterschätzverfahren bzw. einer Optimierungsrechnung bestimmt werden.

Die Winkellagen der Leseköpfe sind dabei derart gewählt, dass sich zumindest einer der Winkelabstände zwischen den jeweils benachbarten Leseköpfen von zumindest einem, insbesondere von allen, Winkelabständen der restlichen/weiteren Leseköpfen unterscheidet, wodurch insbesondere keine gänzlich symmetrische Anordnung der Leseköpfe entlang des Umfangs des Codeträgers geschaffen wird. Es handelt sich somit um keine rotationssymmetrische Anordnung da die Abstände zwischen den Leseköpfen ungleich sind. Die Leseköpfe weisen entlang des Codeträgers keine gleichen Zwischenräume auf.

Erfindungsgemäß unterscheiden sich beispielsweise bei N Leseköpfen zumindest N-1 Abstände zwischen den Leseköpfen voneinander, wodurch eine Bestimmbarkeit von Harmonischen bis zu einer Ordnung $\geq$ N ermöglicht wird.

Mit anderen Worten sollte entsprechend der vorliegenden Erfindung keiner der Winkelabstände einem anderen Winkelabstand entsprechen, das heißt die Beanstandungen der Leseköpfe sind unterschiedlich.

Zwei gleiche Winkelabstände zwischen Leseköpfen können zwar durch die Bestimmbarkeit redundanter Informationen eine Verbesserung der Genauigkeit, beispielsweise durch Interpolation, ermöglichen - was deren Anwendung per se nicht ausschließt, jedoch tragen gleich beabstandete Leseköpfe aber generell nicht zur Bestimmbarkeit zusätzlicher harmonischer Fehler entsprechend der Erfindung bei.

Beispielsweise kann angestrebt werden, alle Abstände zwischen den Leseköpfe unterschiedlich zu gestalten und diese derart zu wählen, dass die sich aus den Winkelabständen entsprechend der Formel 0.10 ergebenden Bewertungsfaktoren für alle zu bestimmenden Harmonischen möglichst groß und insbesondere in der Zusammenschau der zu bestimmenden Harmonischen über aller Winkelabstände bei keiner Harmonischen für alle auswertbaren Winkelabstände zu Null ergeben. So kann beispielsweise bei einer zu erwartenden Gleichverteilung der Fehler über die zu bestimmenden Harmonischen über alle Winkelabstände eine entsprechende Gleichverteilung der Summe der Bewertungsfaktoren je zu bestimmender Harmonischer angestrebt werden. Die mathematischen Grundlagen zur Berechnung einer entsprechenden Winkelabstands-Aufteilung für eine speziell gewünschte Kombination von Anzahl Leseköpfen, Anzahl der zu bestimmenden Harmonischen sowie deren Bewertungsfaktoren (bspw. aufgrund einer erwarteten Fehlerverteilung), sind aus der Literatur hinlänglich bekannt.

Figur 1b stellt die Bewertungsfaktoren von Harmonischen bei einer Fourier-Reihe für die Anordnung der Leseköpfe mit einer Winkellage von 150° aus Figur 1a in tabellarischer Form dar.

Die erste Spalte h gibt dabei die Ordnung der Harmonischen an und die Spalte a/A (150°) gibt den dazugehörigen Bewertungsfaktor dieser Harmonischen im Bereich von 0% bis 100% an. Dabei steht ein Bewertungsfaktor von 100% für die vollständige Erfassbarkeit dieser Harmonischen und 0% für eine mit dieser Anordnung nicht erfassbare Harmonische. Diese Bewertungsfaktoren beeinflussen maßgeblich das erreichbare Signal-Rausch-Verhältnis (SNR) bei der Bestimmung der Harmonischen. Folglich bestimmen die Bewertungsfaktoren auch die maximal erreichbare Genauigkeit der Koeffizientenwerte der Harmonischen.

Aus der Tabelle ist ersichtlich, dass mit einer Winkellage von 150° harmonische bis zur elften Ordnung durchgängig bestimmt werden können. Dabei sind die 1. 4. 6. 8. 11. Harmonisch durch ihren hohen Bewertungsfaktor mit einem verhältnismäßig guten SNR bestimmbar. Die zwölfte Harmonische ist mit dieser Anordnung nicht bestimmbar, da ihr Bewertungsfaktor bei 0% liegt.

Es ist somit bei 150 Grad die erste Harmonische bis zur elften durchgehend bestimmbar, allerdings mit unterschiedlichem Signal-Rausch-Verhältnis.

Der Winkel von 150 Grad wurde hier beispielhaft gewählt. Selbstverständlich können beliebige andere Winkel gewählt werden, beispielsweise um harmonische einer gewünschten Ordnung mit möglichst hoher Qualität erfassen zu können, falls eine solche Forderung bekannt ist. Bei sehr geringem Winkelabstand der Leseköpfe unter 50 Grad sind jedoch die Bewertungsfaktoren der niedrigen Harmonischen, insbesondere der ersten Harmonischen, sehr niedrig. Daher können mit kleinen Winkellagen unter 50 Grad typische Fehler von Drehgebern wie

- Unwuchtigkeit,

- Exzentrität,

- Taumelfehler,

- Lagerfehler,

- thermischer oder mechanischer Verzug des Codeträgers nur mit eingeschränkter Genauigkeit erfasst werden.

Das Prinzip lässt sich auch auf mehr als zwei Leseköpfe und auf deren Permutationen ausweiten, um weitere Harmonische, oder einige Harmonische mehrfach erfassen zu können und somit die Winkelfehler noch besser bestimmen zu können.

Die bei der Reihen-Entwicklung erhaltenen Koeffizienten stellen dabei den Fehler in Form von harmonischen Anteilen über dem periodischen Messbereich von einer Umdrehung dar. Ein Messwert des Winkelmesssystems kann anhand der Koeffizienten und des Winkelpositionswerts des Lesekopfes korrigiert werden. Alternativ dazu ist es auch möglich, mit den Koeffizienten direkt eine bei der Absolutwertbestimmung verwendete Codetabelle zu modifizieren oder eine Korrekturtabelle zur Codetabelle anzulegen und somit auf Korrekturberechnungen während des Messbetriebes zu verzichten.

Zur vollständigen Kalibrierung muss der Winkelgeber um einen bestimmten, minimalen Winkel gedreht werden, welcher von den Winkelpositionen der Leseköpfe abhängig ist. Dadurch können die Koeffizienten der Harmonischen erfasst werden. Die durch ein darüber hinausgehendes Drehen ermittelten redundanten Daten, welche beispielsweise mittels einer Ausgleichsrechnung dazu genutzt werden können, auch nicht systematische Fehler zu reduzieren und die Genauigkeit der Kalibrierung weiter zu verbessern.

Nach erfolgter Kalibrierung kann bei einer Messung auch einer oder mehrere der Leseköpfe deaktiviert oder gar entfernt werden. Dadurch kann beispielsweise der Stromverbrauch gesenkt und/oder die Auswertegeschwindigkeit erhöht werden.

Die Kalibrierung des Winkelmesssystems kann zu verschiedensten Zeitpunkten erfolgen, insbesondere:

- Bei Zusammenbau des Winkelmesssystems,

- nach der Montage des Winkelmesssystems in einem Gerät,

- fortlaufend während des Messbetriebes,

- Beim ersten Einschalten des Geräts,

- Bei jedem Einschalten des Geräts

- In zyklischen oder azyklischen Zeitintervallen,

- Bei Änderung der Umgebungsbedingungen,

- Nach Stoss- oder Schlagbeanspruchungen,

- Bei regelmässigen Serviceintervallen.

  ▪ fortlaufend während des Messbetriebes unter Berücksichtigung von Kalibrierparametern, welche während des Messbetriebs bestimmt wurden und/oder von Kalibrierparametern, welche bei einer früheren Kalibrierung bestimmt und gespeichert wurden.

Das Kalibrationsverfahren bzw. Auswerteverfahren wird in vorteilhafter Weise, zumindest teilweise, durch ein Computerprogrammprodukt ausgeführt, welches auf einem maschinenlesbaren Träger gespeichert ist. Beispielsweise kann dies mittels eines Microcontrollers, digitalen Signalprozessors, FPGAs oder ASICs geschehen, wobei der entsprechende Programmcode beispielsweise von einem Geräteinternen Speicher, von externen Speichermedien oder mittels elektromagnetischen Wellen bereitgestellt werden kann.

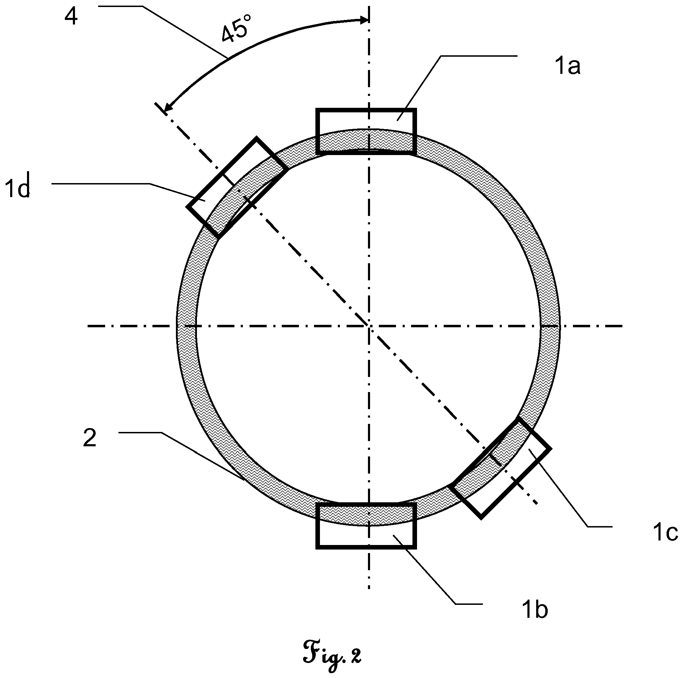

Figur 2 stellt in schematischer Form eine weitere Ausführungsform eines erfindungsgemässen Winkelmesssystems dar. Es symbolisiert eine der vielen alternativen Ausführungsformen mit mehreren Leseköpfen 1a, 1b, 1c, 1d, welche in verschiedensten Lagen zueinander angebracht sein können. Das Kalibierverfahren ist hierbei analog zu dem bezüglich Figur 1 beschriebenen Ablauf ausführbar.

Beispielhaft kann der in dieser Figur dargestellte Winkelmesser durch eine zweifache 180° Anordnung der Leseköpfe 1a und 1b bzw. 1c und 1d besonders die 1. Harmonische mehrmals und mit voller Auflösung bestimmt werden. Durch die 45° Grad Anordnung 4 der Paare untereinander, kann weiters speziell die 4. Harmonische mit voller Auflösung bestimmt werden. Durch die bereits erwähnte Permutation kann beispielsweise auch ein Winkel von 225° ausgewertet werden. Durch die paarweise doppelte Anordnung erfolgt eine zweifache Auswertung und somit kann durch Anwendung einer Ausgleichsrechnung, beispielsweise einer Mittelung, eine weitere Steigerung der Genauigkeit des Messwertes erzielt werden. Es ist auch hier der Winkel von 45° nur eine exemplarisch gewählte Möglichkeit aus beliebigen Winkeln.

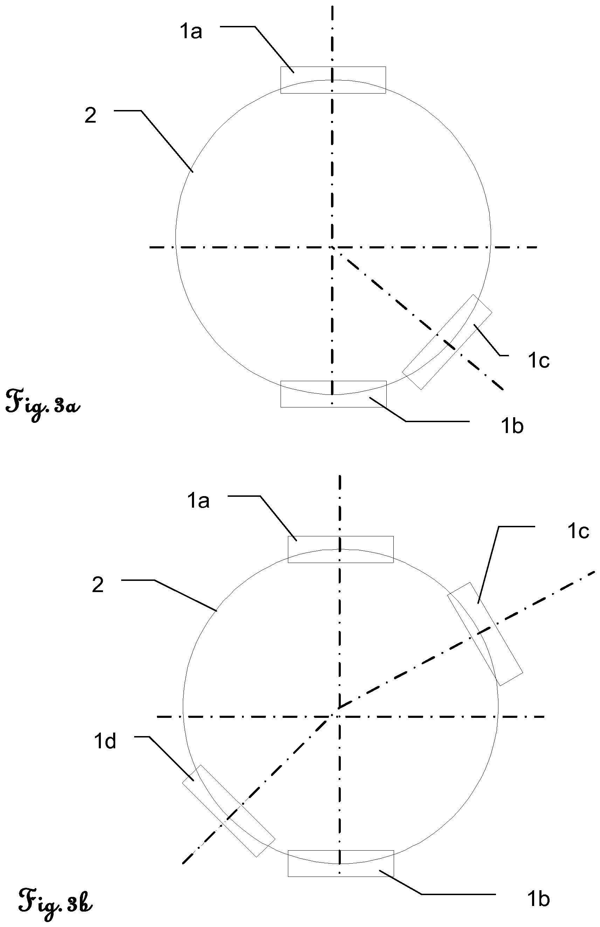

In Figur 3a ist eine weitere Ausführungsform mit drei Leseköpfen 1a, 1b, 1c zu gezeigt, bei welcher jedoch nur zwei Leseköpfe 1a und 1b als gegenüberliegendes Paar angeordnet sind und der verbleibende Lesekopf 1c in einer Winkelstellung angeordnet ist, in welcher sich möglichst viele harmonische Fehler dieses Messsystems mit signifikantem Anteil bestimmen lassen. Durch eine solche Anordnung sind die aufbaubedingt zu erwartenden, dominanten Fehlern des Messsystems mit hoher Genauigkeit bestimmbar.

Figur 3b zeigt eine weitere Anordnung von vier Leseköpfen 1a, 1b, 1c, 1d als ein Beispiel einer weiteren erfindungsgemässen Ausführungsform eines Winkelgebers. Wie durch die strichpunktierten Linien als Winkellagen der Leseköpfe schematisch angedeutet, handelt es sich bei dieser Anordnung der Leseköpfen 1a, 1b um zwei gegenüberliegende Leseköpfe, mit welchen der Positionscode an zwei um 180° versetzten Winkelpositionen erfasst wird. Somit ist ein genaues Erfassen der ersten Harmonischen erreicht. Bei dieser Anordnung wird durch zwei weitere Leseköpfe 1c, 1d in weiteren Winkellagen ein genaues Erfassen auch jener Harmonischen erreicht, welche durch die 180° Anordnung nicht erfasst werden können. Dabei können die Winkelfehlers jeweils mit allen möglichen Zweierkombinationen der Leseköpfe 1a, 1b, 1c, 1d bestimmt werden und somit beispielsweise durch eine Ausgleichsrechung die Koeffizienten, die mit 6 unterschiedlich beabstandeten Winkellagen berechnet wurden, zusammengefasst werden.

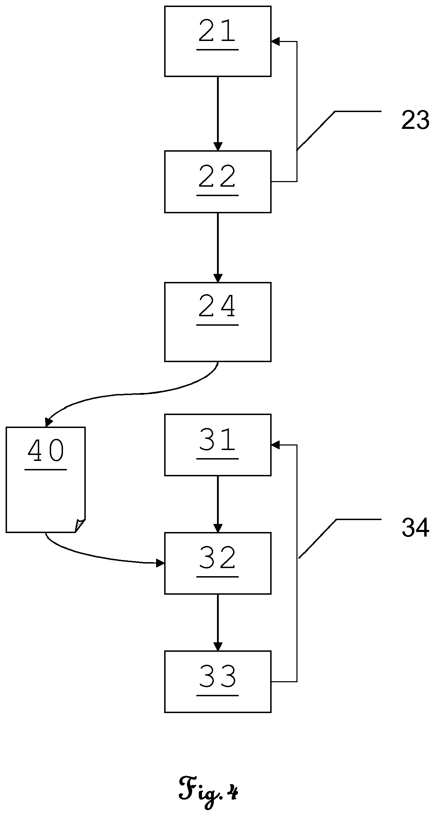

In Figur 4 ist ein Ablaufdiagramm des Kalibrierverfahrens durch die Blöcke 21 bis 24 und des Winkelmessverfahrens durch die Blöcke 31 bis 34 dargestellt.

Es wird das erfindungsgemäße referenzsystemfrei ausführbare Kalibrierverfahren für eine Winkelmesseinrichtung 7 mit einem Codeträger 2, welcher einen absoluten Positionscode trägt, und zumindest zwei Leseköpfen 1a, 1b, 1c, 1d, die eine fixe, bekannte Winkellage 4 mit unterschiedlichem Winkelabstand, insbesondere von mehr als 50 Grad, beispielsweise von etwa 150 Grad, relativ zueinander aufweisen und jeweils den Positionscode zumindest teilweise erfassen, sodass ein absoluter Winkelpositionswert des jeweiligen Lesekopfes 1a, 1b, 1c, 1d relativ zum Codeträger 4 bestimmbar ist, dargestellt.

Der ist Codeträger 4 gegenüber den Leseköpfen 1a, 1b, 1c, 1d drehbar und es sind somit unterschiedliche Winkelstellungen 3 des Codeträgers 4 gegenüber den Leseköpfen 1a, 1b, 1c, 1d einnehmbar.

Mit den Schritten

- Bestimmen der Winkelpositionswerte 21 der Leseköpfe 1a, 1b, 1c, 1d in einer Winkelstellung,

- Bestimmen eines Winkelfehlers 22 durch Vergleich der Differenz der Winkelpositionswerte der Leseköpfe mit der bekannten Winkellage 4 der Leseköpfe 1a, 1b, 1c, 1d zueinander,

- Wiederholen des Bestimmens 23 der Winkelpositionswerte und des Winkelfehlers für eine Vielzahl von variierenden Winkelstellungen, und

- Durchführen einer mathematischen Auswertemethode 24 mit

  o einem Bestimmen der Parameter einer die Winkelfehler quantifizierenden mathematischen Funktion,

  ∘ einem Bestimmen von Kalibrierparametern 40 als Parameter der quantifizierenden mathematischen Funktion oder als Korrektur- oder Codetabelle, welche aus den Parametern abgeleitet wird,

wird das Kalibrierverfahren durchgeführt.

Das dazugehörige Winkelmessverfahren zum Bestimmen eines Winkelmesswerts anhand der Winkelmesseinrichtung 7, welche einem Codeträger 2, welcher einen absoluten Positionscode trägt, und zumindest zwei Leseköpfen 1a, 1b, 1c, 1d, die eine fixe, bekannten Winkellage 4 mit verschiedenen Winkelabständen, insbesondere von mehr als 50 Grad, beispielsweise von 70 bis 180 Grad, vorzugsweise von 140 bis 170 Grad, beispielsweise von 150 Grad, relativ zueinander aufweisen und jeweils den Positionscode zumindest teilweise erfassen, sodass ein absoluter Winkelpositionswert des jeweiligen Lesekopfes relativ zum Codeträger bestimmbar ist, aufweist.

Der Codeträger ist gegenüber den Leseköpfen drehbar und somit sind unterschiedliche Winkelstellungen des Codeträgers gegenüber den Leseköpfen einnehmbar.

Mit den Schritten:

∘ Bestimmen eines Winkelpositionswertes 31 durch zumindest einen der Leseköpfe, welcher zumindest einen Teil eines absoluten Positionscodes eines Codeträgers erfasst;

∘ Bestimmen des Winkelmesswerts 32 durch Korrigieren des Winkelpositionswertes anhand von im Rahmen des Kalibrierverfahrens bestimmten Kalibrierparametern 40;

wird der Winkelmesswert 33 bereitgestellt, und dieser Ablauf wird wiederholt 34.

Der Block 21 stellt den Schritt des Bestimmens der Winkelpositionswerte der Leseköpfe in einer Winkelstellung dar.

Darauf folgend wird, symbolisiert durch den Block 22, das bestimmen eines Winkelfehlers durch Vergleich der Differenz der Winkelpositionswerte der Leseköpfe mit der bekannten Winkellage der Leseköpfe zueinander dargestellt.

Der Pfeil 23 symbolisiert den Schritt des Wiederholens des bestimmens der Winkelpositionswerte und des Winkelfehlers für eine Vielzahl von variierenden Winkelstellungen, welches insbesondere so lange durchgeführt wird, bis das Wiederholen des Bestimmens der Winkelpositionswerte und des Winkelfehlers in einem Messbereich des Winkelmesssystems, welcher in Teilbereiche zergliedert ist, derart oft ausgeführt wurde, dass bestimmte Teilbereiche durch die variierenden Winkelstellungen mit einer definierten Dichte abgedeckt sind, insbesondere wobei die Winkelstellungen über diese bestimmten Teilbereiche etwa gleichmäßig verteilt sind.

Block 24 symbolisiert das Durchführen einer mathematischen Auswertemethode mit einem Entwickeln der für die jeweiligen Winkelstellungen bestimmten Winkelfehler in eine mathematische Reihe und einem Bestimmen von Kalibrierparametern als Koeffizientensatz der mathematischen Reihe oder als Korrektur- oder Codetabelle, welche aus dem Koeffizientensatz abgeleitet wird, und durch Block 40 dargestellt ist.

Der erste Schritt des Auswerteverfahrens wird durch Block 31 symbolisiert und zeigt das Bestimmen eines Winkelpositionswertes durch zumindest einen der Leseköpfe, welcher zumindest einen Teil eines absoluten Positionscodes eines Codeträgers erfasst.

In Block 32 wird das Bestimmen des Winkelmesswerts durch Korrigieren des Winkelpositionswertes anhand von im Rahmen des Kalibrierverfahrens bestimmten Kalibrierparametern aus Block 40 ausgeführt.

Der Block 33 steht schließlich für das Bereitstellen des Winkelmesswertes und der Pfeil 34 für ein allfälliges Wiederholen der Winkelmessung.

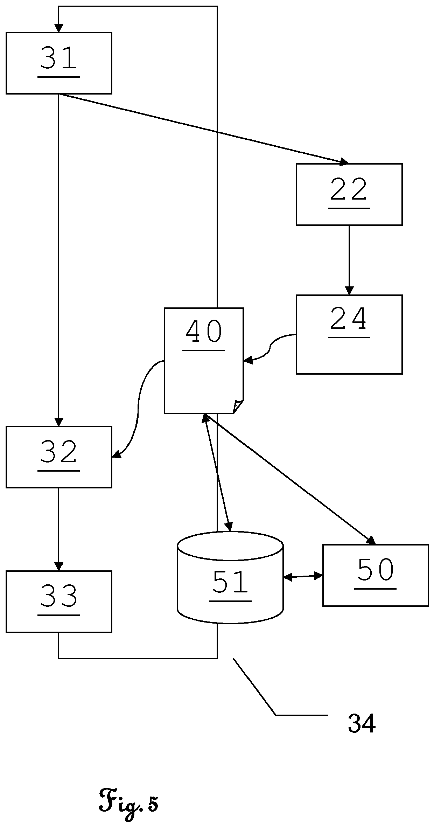

In der Figur 5 ist ein Ablaufdiagramm des Kalibrierverfahrens dargestellt welches den Ablauf einer fortlaufenden Kalibrierung parallel zum Messbetrieb darstellt.

Die Winkelpositionswerte welche in dem durch Block 31 dargestellten Schritt erfasst werden, werden hierbei einerseits in Block 32 anhand der Kalibrierparameter aus Block 40 korrigiert und dann in Block 33 zur Weiterverarbeitung bereitgestellt.

Parallel zur Korrektur der Winkelpositionswerte wird anhand dieser in Block 22 die Bestimmung der Kalibrierparameter aus Block 40 vorgenommen bzw. deren Werte durch fortlaufende Anpassung in ihrer Genauigkeit gesteigert. Der Pfeil 34 symbolisiert das wiederholte durchlaufen des Ablaufes während des Messbetriebes.

Die Werte der Kalibrierparameter können dabei optional einer durch Block 50 dargestellten weiteren Auswertung zugeführt werden, welche beispielsweise bei sprunghaften Wertänderungen eine Warnung auslösen oder einen Schätzwert für die Genauigkeit der Winkelmesseinrichtung aus diesen Werten bestimmen kann.

Die Kalibrierparameter können auch optional in einem Speicher 51 gespeichert werden, beispielsweise um beim Einschalten bereits Startwerte zu haben, durch vergleich der Ermittelten und gespeicherten Werte eine Dejustierung zu erkennen zu können oder ähnlichem.

Die beiden optionalen Funktionen, welche durch 50 bzw. 51 dargestellt sind, können in analoger Weise auch bei dem in Figur 4 dargestellten Ablauf mit einbezogen werden.

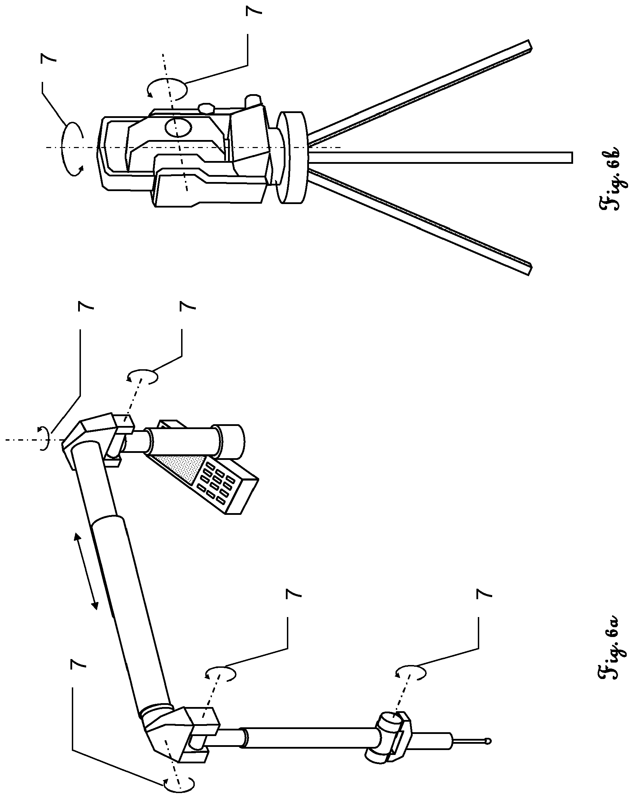

Figur 6a zeigt beispielhaft eine Verwendung von erfindungsgemässen Winkelmesssystemen 7, symbolisiert durch deren Drehachsen und einem Pfeil zur Darstellung der Drehbarkeit, in einem Gelenkarm-Koordinatenmessgerät (articulated arm) für Messaufgaben.

In Figur 6b ist beispielhaft ein geodätisches Vermessungsgerät dargestellt, welches zwei Winkelmesssysteme 7 mit erfindungsgemässem Kalibrierungsverfahren verwendet. Dieses Gerät lässt sich während oder vor dem Einsatz im Feld oder nach einem expliziten Starten der Kalibrierung durch ein- oder mehrfaches Abfahren des Messbereiches oder teilen davon kalibrieren bzw. rekalibrieren.

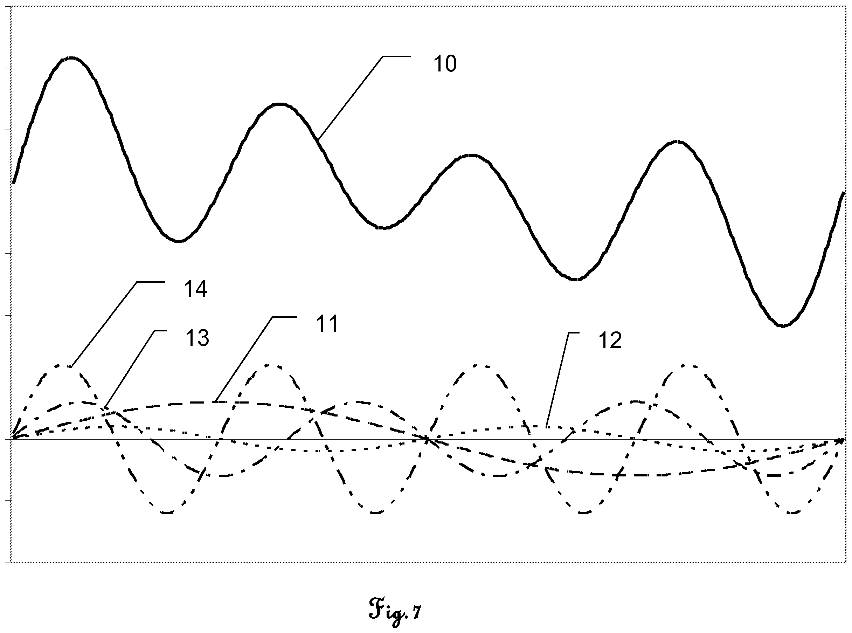

Figur 7 zeigt beispielhaft eine graphische Darstellung einer Reihenentwicklung eines Winkelfehlers 10 in eine erste bis vierte harmonische Oberschwingung 11, 12, 13, 14.

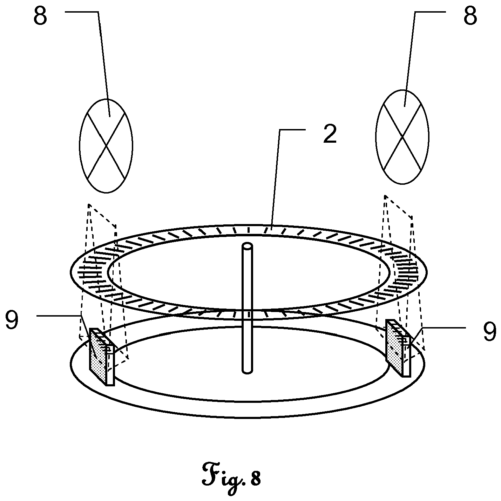

Eine schematische Darstellung einer Ausführungsform von bei diesem Verfahren verwendbaren optoelektronischen Leseköpfen ist in Figur 8 beispielhaft dargestellt. Es ist dabei im Speziellen eine Projektion eines Positionscodes auf ein optoelektronisches Sensorelement 9 dargestellt.

Der Positionscode ist hierbei in Form einer Codescheibe 2, welche im Durchlichtverfahren betrieben wird, dargestellt. Ebenso liesse sich hierzu beispielsweise Codeerfassung auf Basis von Reflexion, Abbildung, Schattenwurf, Holographie, mittels selbstleuchtender Codierung, oder anderen bekannten Verfahren anwenden. Auch sind optische Umlenkung und Beugung durch Spiegel, Linsensystemen, Hohlspiegel oder einer beliebigen Kombination solcher Elemente realisierbar.

Als Lichtquelle 8 können hierbei beispielsweise LED, Laser, Laserdioden, Glühlampen, oder andere Bauelemente, welche elektromagnetische Strahlung emmitieren, Verwendung finden. Zusätzlich kann deren Strahlung auch über Linsen und Umlenksysteme geführt sein.

Der Positionscode kann in Form von hell-dunkel-Mustern, Moire-Muster, Strichcodes, zweidimensionalem Code, etc. ausgeführt sein.

Als Codierung eignen sich alle Arten von Code, welche eine Bestimmung einer absoluten Position zulassen, wie beispielsweise Maximalfolgen, verschiedenste binäre Codierungen, analoge Intensitätsverläufe, etc.

Generell muss der Lesekopf in der Lage sein, den Positionscode oder Teile davon elektronisch Auswertbar zu machen. In diesem Beispiel geschieht dies durch eine optische Sensorzeile 9, beispielsweise als Anordnung von Photodioden oder als CCD-Chip realisierbar. Ob die Umwandlung des Positionscodes in elektrische Signale in Form von optischer, magnetischer, kapazitiver Auslesung in eindimensionaler, zweidimensionaler, dreidimensionaler Form geschieht, ist für das Kalibierverfahren nicht von Bedeutung.

**Patentansprüche**

1. Referenzsystemfrei ausführbares Kalibrierverfahren für eine Winkelmesseinrichtung (7) mit

   ▪ einem Codeträger (2), welcher einen absoluten Positionscode trägt, und
   ▪ zumindest $N \geq 2$ Leseköpfen (1a,1b,1c,1d), die eine fixe, bekannte Winkellage (4) mit einem Winkelabstand, insbesondere von mehr als 50 Grad, beispielsweise von 70 bis 180 Grad, vorzugsweise von 140 bis 170 Grad, beispielsweise von 150 Grad, relativ zueinander aufweisen und jeweils den Positionscode zumindest teilweise erfassen, sodass ein absoluter Winkelpositionswert des jeweiligen Lesekopfes relativ zum Codeträger bestimmbar ist,

   wobei der Codeträger (2) gegenüber den Leseköpfen(1a, 1b, 1c, 1d) drehbar ist und somit unterschiedliche Winkelstellungen des Codeträgers gegenüber den Leseköpfen einnehmbar sind,
   mit den Schritten

   ▪ Bestimmen der Winkelpositionswerte (21) der Leseköpfe (1a,1b,1c,1d) in einer Winkelstellung,
   ▪ Bestimmen eines Winkelfehlers (22) durch Vergleich der Differenz der Winkelpositionswerte der Leseköpfe (1a,1b,1c,1d) mit der bekannten Winkellage (4) der Leseköpfe (1a,1b,1c,1d) zueinander,
   ▪ Wiederholen des Bestimmens der Winkelpositionswerte (23) und des Winkelfehlers für eine Vielzahl von variierenden Winkelstellungen, und
   ▪ Durchführen einer mathematischen Auswertemethode (24) mit

     ∘ einem Bestimmen von Parametern einer die Winkelfehler quantifizierenden mathematischen Funktion, und
     ∘ einem Bestimmen von Kalibrierparametern (40) als die Parameter der quantifizierenden mathematischen Funktion oder als Korrektur- oder Codetabelle, welche aus den Parametern abgeleitet wird.

2. Kalibrierverfahren nach Anspruch 1,
   **dadurch gekennzeichnet, dass**
   die Winkellagen (4) der Leseköpfe (1a,1b,1c,1d) derart gewählt sind, dass sich zumindest einer der Winkelabstände zwischen jeweils benachbarten Leseköpfen (1a,1b,1c,1d) von zumindest einem der restlichen N-1 Winkelabstände unterscheidet, insbesondere wobei alle N Winkelabstände unterschiedlich sind.

3. Kalibrierverfahren nach einem der Ansprüche 1 oder 2,
   **dadurch gekennzeichnet, dass**

   ▪ die Bestimmung der Parameter der quantifizierenden mathematischen Funktion durch eine Parameterschätzung anhand eines Optimierungsverfahrens erfolgt,
   ▪ insbesondere wobei die quantifizierende mathematische Funktion eine mathematische Reihe, insbesondere eine Fourier-Reihe, ist und die Parameter durch Entwickeln der für die jeweiligen Winkelstellungen bestimmten Winkelfehler (10) die Koeffizienten von allen harmonische Oberschwingungen (11, 12, 13, 14) bis zu einer Ordnung $\geq N$ des Winkelfehlers (10) darstellt.

4. Kalibrierverfahren nach einem der Ansprüche 1 oder 3,
   **dadurch gekennzeichnet, dass**
   das Wiederholen des Bestimmens der Winkelpositionswerte und des Winkelfehlers (10) in einem Messbereich des Winkelmesssystems (7), welcher in Teilbereiche zergliedert ist, derart geschieht, dass bestimmte Teilbereiche durch die variierenden Winkelstellungen mit einer definierten Dichte abgedeckt sind, insbesondere wobei die Winkelstellungen über diese bestimmten Teilbereiche in etwa gleichmäßig verteilt sind, insbesondere wobei die Winkelpositionswerte an den Lesköpfen (1a,1b,1c,1d) zeitgleich erfasst werden.

5. Kalibrierverfahren nach einem der Ansprüche 1 bis 4,
   **dadurch gekennzeichnet, dass**

   ▪ zusätzlich eine Bestimmung von Dejustierungen durch Überwachung der Kalibrierparametern (40) auf Änderung und/oder

- eine Ableitung eines Schätzwertes für die Genauigkeit des Winkelsensors anhand der Kalibrierparameter (40) durchgeführt wird.

6. Kalibrierverfahren nach einem der Ansprüche 1 bis 5,
**dadurch gekennzeichnet, dass**
der Winkelpositionswert und/oder der Winkelfehler in derselben Winkelstellung mehrfach bestimmt und diese vor dem Durchführen der mathematischen Auswertemethode gemittelt werden, insbesondere durch eine Ausgleichsrechnung nach der Methode der kleinsten Quadrate, oder das Kalibrierverfahren mehrfach ausgeführt wird und für die dabei erhaltenen Koeffizientensätze ein Optimierungsverfahren durchgeführt wird.

7. Kalibrierverfahren nach einem der Ansprüche 1 bis 6,
**dadurch gekennzeichnet, dass**
die Winkellage (4) der Leseköpfe (1a,1b,1c,1d) anhand einer Differenz der Winkelpositionen in einer beliebigen Winkelstellung als Referenz-Winkelstellung, oder insbesondere durch eine Mittelung der Differenzen über mehrere beliebige Referenz-Winkelstellungen, ermittelt wird.

8. Kalibrierverfahren nach einem der Ansprüche 1 bis 7,
**dadurch gekennzeichnet, dass**
die Winkellage (4) der Leseköpfe (1a,1b,1c,1d) derart gewählt ist, dass die dominanten Winkelfehler, welche einen signifikanten Fehleranteil liefern, insbesondere wie

- Fehler bedingt durch Exzentrität,
- Fehler in der Codeteilung der Codescheibe,
- Fehler durch sich ändernde Umwelteinflüsse,

in der qualifizierenden mathematischen Funktion enthalten sind, insbesondere mit einem Fehleranteil von zumindest 25%.

9. Kalibrierverfahren nach einem der Ansprüche 1 bis 8,
**dadurch gekennzeichnet, dass**
das Bestimmen der Winkelpositionen mit jeweils paarweise symmetrisch angeordneten Leseköpfen (1a,1b,1c,1d) geschieht.

10. Kalibrierverfahren nach einem der Ansprüche 1 bis 9,
**dadurch gekennzeichnet, dass**
die Leseköpfe (1a,1b,1c,1d) als

- optische,
- elektro-optische
- magnetische oder
- kapazitive

Leseköpfe ausgebildet sind.

11. Winkelmessverfahren zum Bestimmen eines Winkelmesswerts anhand einer Winkelmesseinrichtung (7), wobei die Winkelmesseinrichtung (7) aufweist:

- einen Codeträger (2), welcher einen absoluten Positionscode trägt, und
- zumindest N ≥ 2 Leseköpfe (1a,1b,1c,1d), die eine fixe, bekannte Winkellage (4) mit einem Winkelabstand, insbesondere von mehr als 50 Grad, beispielsweise von 70 bis 180 Grad, vorzugsweise von 140 bis 170 Grad, beispielsweise von 150 Grad, relativ zueinander aufweisen, insbesondere wobei die Winkellagen (4) der Leseköpfe (1a,1b,1c,1d) derart gewählt sind, dass sich zumindest einer der Winkelabstände zwischen jeweils benachbarten Leseköpfen (1a,1b,1c,1d) von zumindest einem der restlichen N-1 Winkelabstände unterscheidet, und jeweils den Positionscode zumindest teilweise erfassen, sodass ein absoluter Winkelpositionswert des jeweiligen Lesekopfes (1a,1b,1c,1d) relativ zum Codeträger (2) bestimmbar ist, wobei der Codeträger (2) gegenüber den Leseköpfen (1a,1b,1c,1d) drehbar ist und somit unterschiedliche Winkelstellungen des Codeträgers gegenüber den Leseköpfen (1a,1b,1c,1d) einnehmbar sind,

mit den Schritten:

- Bestimmen eines Winkelpositionswertes (31) durch zumindest einen der Leseköpfe (1a,1b,1c,1d), welcher zumindest einen Teil eines absoluten Positionscodes eines Codeträgers (2) erfasst;
- Bestimmen des Winkelmesswerts (32) durch Korrigieren des Winkelpositionswertes anhand von im Rahmen eines Kalibrierverfahrens nach einem der Ansprüche 1 bis 10 bestimmten Kalibrierparametern (40);
- Bereitstellen des Winkelmesswertes (33).

12. Winkelmessverfahren nach Anspruch 11,
**dadurch gekennzeichnet, dass**
zusätzlich das Kalibrierverfahren nach einem der Ansprüche 1 bis 10 durchgeführt wird, insbesondere

- bei Zusammenbau des Winkelgebers,
- nach der Montage des Winkelgebers in einem Gerät,
- bei jedem einschalten des Geräts,
- in zyklischen oder azyklischen Zeitintervallen,
- durch den Benutzer ausgelöst,
- bei Änderung der Umgebungsbedingungen,
- nach Stoss oder Schlagbeanspruchungen
- bei regelmäßigen Serviceintervallen und/oder
- fortlaufend während des Messbetriebes unter Berücksichtigung von Kalibrierparametern (40), welche während des Messbetriebs bestimmten wurden und/oder bei einer früheren Kalibrierung bestimmt und gespeichert wurden.

13. Winkelmessverfahren nach Anspruch 12,
**dadurch gekennzeichnet, dass**
nach Ausführung des Kalibrierverfahrens ein Lesekopf (1a,1b,1c,1d) oder mehrere Leseköpfe (1a,1b,2c,1d) deaktiviert oder entfernt wird/werden.

14. Winkelmesseinrichtung (7) mit

- einem Codeträger (2), welcher einen absoluten Positionscode trägt,
- zumindest $N \geq 2$ Leseköpfen (1a,1b,1c,1d), die eine fixe, bekannte Winkellage (4) mit einem Winkelabstand, insbesondere von mehr als 50 Grad, beispielsweise von 70 bis 180 Grad, vorzugsweise von 140 bis 170 Grad, beispielsweise von 150 Grad, relativ zueinander aufweisen, insbesondere wobei die Winkellagen (4) der Leseköpfe (1a,1b,1c,1d) derart gewählt sind, dass sich zumindest einer der Winkelabstände zwischen jeweils benachbarten Leseköpfen (1a,1b,1c,1d) von zumindest einem der restlichen N-1 Winkelabstände unterscheidet, und jeweils zum zumindest teilweisen Erfassen des Positionscodes geeignet sind, sodass ein absoluter Winkelpositionswert des jeweiligen Lesekopfes (1a,1b,1c,1d) relativ zum Codeträger bestimmbar ist und wobei der Codeträger gegenüber den Leseköpfen (1a,1b,1c,1d) drehbar ist und somit unterschiedliche Winkelstellungen des Codeträgers gegenüber den Leseköpfen (1a,1b,1c,1d) einnehmbar sind und
- einer Auswerteeinheit zur Durchführung folgender Schritte des Kalibrierverfahrens nach einem der Ansprüche 1 bis 10:

  ◦ Bestimmen des Winkelfehlers (22) durch Vergleich der Differenz der Winkelpositionswerte der Leseköpfe (1a,1b,1c,1d) mit der bekannten Winkellage (4) der Leseköpfe (1a,1b,1c,1d) zueinander;
  ◦ Wiederholen des Bestimmens (23) der Winkelpositionswerte und des Winkelfehlers für eine Vielzahl von variierenden Winkelstellungen;
  ◦ Durchführen einer mathematischen Auswertemethode (24) mit
  ◦ einem Bestimmen der Parameter einer die Winkelfehler quantifizierenden mathematischen Funktion,
  ◦ einem Bestimmen von Kalibrierparametern (40) als Parameter der quantifizierenden mathematischen Funktion oder als Korrektur- oder Codetabelle, welche aus den Parametern abgeleitet wird;

  und/oder zumindest folgender Schritte des Winkelmessverfahrens nach einem der Ansprüche 11 bis 13:

  ◦ Bestimmen des Winkelmesswerts (32) durch Korrigieren des Winkelpositionswertes anhand von im Rahmen des Kalibrierverfahrens nach einem der Ansprüche 1 bis 10 bestimmten Kalibrierparametern (40);
  ◦ Bereitstellen des Winkelmesswerts (33).

**15.** Computerprogrammprodukt, das auf einem maschinenlesbaren Träger gespeichert ist, oder Computer-Daten-Signal, verkörpert durch eine elektromagnetische Welle, mit Programmcode zur Durchführung folgender Schritte des Kalibierverfahrens nach einem der Ansprüche 1 bis 10:

○ Bestimmen des Winkelfehlers (22) durch Vergleich der Differenz der Winkelpositionswerte der Leseköpfe (1a,1b,1c,1d) mit der bekannten Winkellage (4) der Leseköpfe zueinander, insbesondere wobei die Winkellagen (4) der Leseköpfe (1a,1b,1c,1d) derart gewählt sind, dass sich zumindest einer der Winkelabstände zwischen jeweils benachbarten Leseköpfen (1a,1b,1c,1d) von zumindest einem der restlichen N-1 Winkelabstände unterscheidet;
○ Wiederholen des Bestimmens (23) der Winkelpositionswerte und des Winkelfehlers für eine Vielzahl von variierenden Winkelstellungen;
○ Durchführen einer mathematischen Auswertemethode (24) mit

○ einem Bestimmen der Parameter einer die Winkelfehler quantifizierenden mathematischen Funktion,
○ einem Bestimmen von Kalibrierparametern (40) als Parameter der quantifizierenden mathematischen Funktion oder als Korrektur- oder Codetabelle, welche aus den Parametern abgeleitet wird;

und/oder zumindest der folgenden Schritte des Winkelmessverfahrens nach einem der Ansprüche 11 bis 13:

○ Bestimmen des Winkelmesswerts (32) durch Korrigieren des Winkelpositionswertes anhand von im Rahmen des Kalibierverfahrens nach einem der Ansprüche 1 bis 10 bestimmten Kalibrierparametern (40);
○ Bereitstellen des Winkelmesswerts (33);

insbesondere wenn das Programm in einer Auswerteeinheit eines Winkelmesssystems (7) ausgeführt wird.

## Claims

**1.** A calibration method that can be carried out without a reference system for an angle measuring device (7) comprising

• a code carrier (2) carrying an absolute position code, and
• at least N ≥ 2 reading heads (1a, 1b, 1c, 1d) which have a fixed, known angular position (4) having an angular distance, in particular of more than 50 degrees, for example of 70 to 180 degrees, preferably of 140 to 170 degrees, for example of 150 degrees, relative to one another and in each case detect the position code at least partially, such that an absolute angular position value of the respective reading head relative to the code carrier can be determined,

wherein the code carrier (2) is rotatable relative to the reading heads (1a, 1b, 1c, 1d) and different angular positions of the code carrier relative to the reading heads can thus be assumed,
comprising the following steps:

• determining the angle position values (21) of the reading heads (1a, 1b, 1c, 1d) in one angular position,
• determining an angle error (22) by comparing the difference between the angle position values of the reading heads (1a, 1b, 1c, 1d) with the known angular position (4) of the reading heads (1a, 1b, 1c, 1d) with respect to one another,
• repeating the steps of determining the angle position values (23) and the angle error for a multiplicity of varying angular positions, and
• carrying out a mathematical evaluation method (24) comprising

○ determining parameters of a mathematical function quantifying the angle errors, and
○ determining calibration parameters (40) as the parameters of the quantifying mathematical function or as a correction or code table which is derived from the parameters.

**2.** The calibration method as claimed in claim 1,
**characterized in that**
the angular positions (4) of the reading heads (1a, 1b, 1c, 1d) are chosen in such a way that at least one of the angular distances between respectively adjacent reading heads (1a, 1b, 1c, 1d) differs from at least one of the remaining N-1 angular distances, in particular wherein all N angular distances are different.

**3.** The calibration method as claimed in either of claims 1 and 2,
**characterized in that**

- the determination of the parameters of the quantifying mathematical function is effected by a parameter estimation on the basis of an optimization method,
- in particular wherein the quantifying mathematical function is a mathematical series, in particular a Fourier series, and the parameters represent, by expansion of the angle errors (10) determined for the respective angular positions, the coefficients of all harmonic oscillations (11, 12, 13, 14) up to an order $\geq N$ of the angle error (10).

**4.** The calibration method as claimed in either of claims 1 and 3,
**characterized in that**
repeating the steps of determining the angular position values and the angle error (10) takes place in a measurement range of the angle measuring system (7), which measurement range is subdivided into subranges, in such a way that specific subranges are covered by the varying angular positions with a defined density, in particular wherein the angular positions are distributed approximately uniformly over said specific subranges, in particular wherein the angular position values are detected simultaneously at the reading heads (1a, 1b, 1c, 1d).

**5.** The calibration method as claimed in any one of claims 1 to 4,
**characterized in that**

- in addition a determination of misalignments by monitoring the calibration parameters (40) for change and/or
- a derivation of an estimated value for the accuracy of the angle sensor on the basis of the calibration parameters (40) are/is carried out.

**6.** The calibration method as claimed in any one of claims 1 to 5,
**characterized in that**
the angle position value and/or the angle error are/is determined multiply in the same angular position and these are averaged before the mathematical evaluation method is carried out, in particular by means of a compensatory calculation according to the least squares method, or the calibration method is performed multiply and an optimization method is carried out for the sets of coefficients obtained in the process.

**7.** The calibration method as claimed in any one of claims 1 to 6,
**characterized in that**
the angular position (4) of the reading heads (1a, 1b, 1c, 1d) is determined on the basis of a difference between the angle positions in an arbitrary angle position as reference angular position, or in particular by averaging the differences over a plurality of arbitrary reference angular positions.

**8.** The calibration method as claimed in any one of claims 1 to 7,
**characterized in that**
the angular position (4) of the reading heads (1a, 1b, 1c, 1d) is chosen in such a way that the dominant angle errors, which supply a significant error proportion, in particular such as

- errors caused by eccentricity,
- errors in the code division of the code disk,
- errors owing to changing ambient influences,

are contained in the qualifying mathematical function, in particular with an error proportion of at least 25%.

**9.** The calibration method as claimed in any one of claims 1 to 8,
**characterized in that**
the angle positions are determined with reading heads (1a, 1b, 1c, 1d) arranged symmetrically in each case in pairs.

**10.** The calibration method as claimed in any one of claims 1 to 9,
**characterized in that**
the reading heads (1a, 1b, 1c, 1d) are embodied as

- optical,

• electro-optical
• magnetic or
• capacitive

reading heads.

11. An angle measuring method for determining an angle measurement value with the aid of an angle measuring device (7), wherein the angle measuring device (7) comprises:

• a code carrier (2) carrying an absolute position code, and
• at least $N \geq 2$ reading heads (1a, 1b, 1c, 1d) which have a fixed, known angular position (4) having an angular distance, in particular of more than 50 degrees, for example of 70 to 180 degrees, preferably of 140 to 170 degrees, for example of 150 degrees, relative to one another, in particular wherein the angular positions (4) of the reading heads (1a, 1b, 1c, 1d) are chosen in such a way that at least one of the angular distances between respectively adjacent reading heads (1a, 1b, 1c, 1d) differs from at least one of the remaining N-1 angular distances, and in each case detect the position code at least partially, such that an absolute angular position value of the respective reading head (1a, 1b, 1c, 1d) relative to the code carrier (2) can be determined, wherein the code carrier (2) is rotatable relative to the reading heads (1a, 1b, 1c, 1d) and different angular positions of the code carrier relative to the reading heads (1a, 1b, 1c, 1d) can thus be assumed,

comprising the following steps:

• determining an angle position value (31) by means of at least one of the reading heads (1a, 1b, 1c, 1d), which detects at least one part of an absolute position code of a code carrier (2);
• determining the angle measurement value (32) by correcting the angle position value on the basis of calibration parameters (40) determined in the context of a calibration method as claimed in any one of claims 1 to 10;
• providing the angle measurement value (33).

12. The angle measuring method as claimed in claim 11,
**characterized in that**
in addition the calibration method as claimed in any one of claims 1 to 10 is carried out, in particular

• during assembly of the angle sensor,
• after the mounting of angle sensor in a device,
• upon each occasion when the device is switched on,
• in cyclic or acyclic time intervals,
• in a manner initiated by the user,
• when there is a change in the ambient conditions,
• after impact or shock stresses,
• at regular service intervals and/or
• continuously during measurement operation taking account of calibration parameters (40) which were determined during measurement operation and/or were determined during an earlier calibration and stored.

13. Angle measuring method as claimed in claim 12,
**characterized in that**
after the calibration method has been performed, one reading head (1a, 1b, 1c, 1d) or a plurality of reading heads (1a, 1b, 1c, 1d) is/are deactivated or removed.

14. An angle measuring device (7) comprising

• a code carrier (2) carrying an absolute position code,
• at least $N \geq 2$ reading heads (1a, 1b, 1c, 1d) which have a fixed, known angular position (4) having an angular distance, in particular of more than 50 degrees, for example of 70 to 180 degrees, preferably of 140 to 170 degrees, for example of 150 degrees, relative to one another, in particular wherein the angular positions (4) of the reading heads (1a, 1b, 1c, 1d) are chosen in such a way that at least one of the angular distances between respectively adjacent reading heads (1a, 1b, 1c, 1d) differs from at least one of the remaining N-1 angular distances, and in each case are suitable for detecting the position code at least partially, such that an absolute angular position value of the respective reading head (1a, 1b, 1c, 1d) relative to the code carrier can be determined, and wherein the code carrier is rotatable relative to the reading heads (1a, 1b, 1c, 1d) and different angular positions of the code carrier relative to the reading heads (1a, 1b, 1c, 1d) can thus be assumed, and
• an evaluation unit for carrying out the following steps of the calibration method as claimed in any one of claims 1 to 10:

  ◦ determining an angle error (22) by comparing the difference between the angle position values of the reading heads (1a, 1b, 1c, 1d) with the known angular position (4) of the reading heads (1a, 1b, 1c, 1d) with respect to one another;
  ◦ repeating the steps of determining (23) the angle position values and the angle error for a multiplicity of varying angular positions;
  ◦ carrying out a mathematical evaluation method (24) comprising

    ▪ determining the parameters of a mathematical function quantifying the angle errors,
    ▪ determining calibration parameters (40) as the parameters of the quantifying mathematical function or as a correction or code table which is derived from the parameters;

and/or at least the following steps of the angle measuring method as claimed in any one of claims 11 to 13:

  ◦ determining the angle measurement value (32) by correcting the angle position value on the basis of calibration parameters (40) determined in the context of the calibration method as claimed in any one of claims 1 to 10;
  ◦ providing the angle measurement value (33).

15. A computer program product stored on a machine-readable carrier, or a computer data signal, embodied by an electromagnetic wave, comprising program code for carrying out the following steps of the calibration method as claimed in any one of claims 1 to 10:

  • determining the angle error (22) by comparing the difference between the angle position values of the reading heads (1a, 1b, 1c, 1d) with the known angular position (4) of the reading heads with respect to one another, in particular wherein the angular positions (4) of the reading heads (1a, 1b, 1c, 1d) are chosen in such a way that at least one of the angular distances between respectively adjacent reading heads (1a, 1b, 1c, 1d) differs from at least one of the remaining N-1 angular distances;
  • repeating the steps of determining (23) the angle position values and the angle error for a multiplicity of varying angular positions,
  • carrying out a mathematical evaluation method (24) comprising

    ◦ determining the parameters of a mathematical function quantifying the angle errors,
    ◦ determining calibration parameters (40) as the parameters of the quantifying mathematical function or as a correction or code table which is derived from the parameters;

and/or at least the following steps of the angle measuring method as claimed in any one of claims 11 to 13:

  • determining the angle measurement value (32) by correcting the angle position value on the basis of calibration parameters (40) determined in the context of the calibration method as claimed in any one of claims 1 to 10;
  • providing the angle measurement value (33);

in particular if the program is executed in an evaluation unit of an angle measuring system (7).

## Revendications

1. Procédé d'étalonnage pouvant être exécuté en l'absence de système de référence pour un dispositif de mesure angulaire (7) avec

  ▪ un support de code (2) qui porte un code de position absolu, et
  ▪ au moins N ≥ 2 têtes de lecture (1a, 1b, 1c, 1d) qui présentent un emplacement angulaire (4) fixe connu avec une distance angulaire entre elles, qui est en particulier supérieure à 50 degrés, par exemple comprise entre 70 et 180 degrés, de préférence comprise entre 140 et 170 degrés, par exemple égale à 150 degrés, et qui détectent respectivement le code de position au moins partiellement de telle sorte qu'il est possible de définir une valeur de position angulaire absolue de la tête de lecture respective relativement au support de code,

le support de code (2) pouvant tourner par rapport aux têtes de lecture (1a, 1b, 1c, 1d), et différentes situations angulaires du support de code pouvant être adoptées par rapport aux têtes de lecture,
avec les étapes

- définition des valeurs de position angulaire (21) des têtes de lecture (1a, 1b, 1c, 1d) dans une situation angulaire,
- définition d'une erreur angulaire (22) par comparaison de la différence des valeurs de position angulaire des têtes de lecture (1a, 1b, 1c, 1d) avec l'emplacement angulaire (4) connu des têtes de lecture (1a, 1b, 1c, 1d) entre elles,
- répétition de la définition des valeurs de position angulaire (23) et de l'erreur angulaire (22) pour une multiplicité de situations angulaires variables, et
- réalisation d'une méthode d'analyse (24) mathématique avec

o une définition de paramètres d'une fonction mathématique quantifiant les erreurs angulaires, et
o une définition de paramètres d'étalonnage (40) en tant que paramètres de la fonction mathématique de quantification ou en tant que tableau de correction ou de code qui est dérivé à partir des paramètres.

2. Procédé d'étalonnage selon la revendication 1,
**caractérisé en ce que**
les emplacements angulaires (4) des têtes de lecture (1a, 1b, 1c, 1d) sont choisis de telle sorte qu'au moins une des distances angulaires entre des têtes de lecture (1a, 1b, 1c, 1d) respectivement voisines se distingue d'au moins une des N-1 distances angulaires restantes, toutes les N distances angulaires étant en particulier différentes.

3. Procédé d'étalonnage selon l'une des revendications 1 ou 2,
**caractérisé en ce que**

- la définition des paramètres de la fonction mathématique de quantification s'effectue par une estimation des paramètres à l'aide d'un procédé d'optimisation,
- la fonction mathématique de quantification étant en particulier une série mathématique, en particulier une série de Fourier, et les paramètres représentant, par développement des erreurs angulaires (10) définies pour les positions angulaires respectives, les coefficients de toutes les harmoniques (11, 12, 13, 14) jusqu'à un ordre $\geq$ N de l'erreur angulaire (10).

4. Procédé d'étalonnage selon l'une des revendications 1 ou 3,
**caractérisé en ce que**
la répétition de la définition des valeurs de position angulaire et de l'erreur angulaire (10) dans une plage de mesure du système de mesure angulaire (7) qui est subdivisée en plages partielles s'effectue de telle sorte que des plages partielles définies sont couvertes par les situations angulaires variables avec une densité définie, les positions angulaires étant en particulier réparties de façon à peu près uniforme sur ces plages partielles définies, les valeurs de position angulaire étant en particulier détectées simultanément sur les têtes de lecture (1a, 1b, 1c, 1d).

5. Procédé d'étalonnage selon l'une des revendications 1 à 4,
**caractérisé en ce que**

- en plus, une définition de désajustements est réalisée par la surveillance de la modification des paramètres d'étalonnage (40) et/ou
- une dérivation d'une valeur estimée pour la précision du capteur angulaire est effectuée à l'aide des paramètres d'étalonnage (40).

6. Procédé d'étalonnage selon l'une des revendications 1 à 5,
**caractérisé en ce que**
la valeur de position angulaire et/ou l'erreur angulaire sont définies plusieurs fois dans la même situation angulaire et sont pondérées avant la réalisation de la méthode d'analyse mathématique, en particulier par un calcul de compensation selon la méthode des moindres carrés, ou le procédé d'étalonnage est exécuté plusieurs fois, et un procédé d'optimisation est réalisé pour les jeux de coefficients obtenus en l'occurrence.

**7.** Procédé d'étalonnage selon l'une des revendications 1 à 6,
**caractérisé en ce que**
l'emplacement angulaire (4) des têtes de lecture (la, 1b, 1c, ld) est déterminé à l'aide d'une différence des positions angulaires dans une situation angulaire quelconque en tant que situation angulaire de référence, ou en particulier par un calcul de la moyenne des différences sur plusieurs situations angulaires de référence quelconques.

**8.** Procédé d'étalonnage selon l'une des revendications 1 à 7,
**caractérisé en ce que**
l'emplacement angulaire (4) des têtes de lecture (1a, 1b, 1c, 1d) est choisi de telle sorte que les erreurs angulaires dominantes qui fournissent une proportion d'erreur significative, en particulier telles que

- erreur due à l'excentricité,
- erreur dans la répartition de code du disque codeur,
- erreur causée par des influences ambiantes qui varient,

sont contenues dans la fonction mathématique de quantification, en particulier avec une proportion d'erreur d'au moins 25 %.

**9.** Procédé d'étalonnage selon l'une des revendications 1 à 8,
**caractérisé en ce que**
la définition des positions angulaires s'effectue avec des têtes de lecture (1a, 1b, 1c, 1d) disposées respectivement par paires de façon symétrique.

**10.** Procédé d'étalonnage selon l'une des revendications 1 à 9,
**caractérisé en ce que**
les têtes de lecture (1a, 1b, 1c, 1d) sont constituées en tant que têtes de lecture

- optiques,
- électrooptiques,
- magnétiques ou
- capacitives.

**11.** Procédé de mesure angulaire destiné à la définition d'une valeur de mesure angulaire à l'aide d'un dispositif de mesure angulaire (7), le dispositif de mesure angulaire (7) présentant :

- un support de code (2) qui porte un code de position absolu, et
- au moins N ≥ 2 têtes de lecture (1a, 1b, 1c, 1d) présentent relativement entre elles un emplacement angulaire (4) fixe connu avec une distance angulaire, qui est en particulier supérieure à 50 degrés, par exemple comprise entre 70 et 180 degrés, de préférence comprise entre 140 et 170 degrés, par exemple égale à 150 degrés, les emplacements angulaires (4) des têtes de lecture (1a, 1b, 1c, 1d) étant en particulier choisis de telle sorte qu'au moins une des distances angulaires entre des têtes de lecture (1a, 1b, 1c, 1d) respectivement voisines se distingue d'au moins une des N - 1 distances angulaires restantes, et qui détectent respectivement au moins partiellement le code de position de telle sorte qu'une valeur de position angulaire absolue de la tête de lecture (1a, 1b, 1c, 1d) respective peut être définie relativement au support de code (2), le support de code (2) pouvant tourner par rapport aux têtes de lecture (1a, 1b, 1c, 1d), et différentes situations angulaires du support de code pouvant ainsi être adoptées par rapport aux têtes de lecture (1a, 1b, 1c, 1d),

avec les étapes :

- définition d'une valeur de position angulaire (31) par au moins une des têtes de lecture (1a, 1b, 1c, 1d) qui détecte au moins une partie d'un code de position absolu d'un support de code (2) ;
- définition de la valeur de mesure angulaire (32) par la correction de la valeur de position angulaire à l'aide de paramètres d'étalonnage (40) définis dans le cadre d'un procédé d'étalonnage selon l'une des revendications 1 à 10 ;
- fourniture de la valeur de mesure angulaire (33).

**12.** Procédé de mesure angulaire selon la revendication 11,
**caractérisé en ce que,**

en plus, le procédé d'étalonnage est réalisé selon l'une des revendications 1 à 10, en particulier

- lors de l'assemblage du capteur d'angle,
- après le montage du capteur d'angle dans un appareil,
- lors de chaque mise en circuit de l'appareil,
- à des intervalles de temps cycliques ou acycliques,
- déclenché par l'utilisateur,
- en cas de modification des conditions ambiantes,
- après un choc ou des contraintes par coups,
- lors d'intervalles de service réguliers et/ou
- de façon continue pendant le mode de mesure avec prise en compte de paramètres d'étalonnage (40) qui ont été définis pendant le mode de mesure et/ou qui ont été définis et enregistrés lors d'un étalonnage antérieur.

13. Procédé de mesure angulaire selon la revendication 12,
   **caractérisé en ce que,**
   après l'exécution du procédé d'étalonnage, une tête de lecture (1a, 1b, 1c, 1d) ou plusieurs têtes de lecture (1a, 1b, 1c, 1d) est/sont désactivée(s) ou enlevée(s).

14. Dispositif de mesure angulaire (7) avec

- un support de code (2) qui porte un code de position absolu,
- avec au moins $N \geq 2$ têtes de lecture (1a, 1b, 1c, 1d) qui présentent relativement entre elles un emplacement angulaire (4) fixe connu avec une distance angulaire, qui est en particulier supérieure à 50 degrés, par exemple comprise entre 70 et 180 degrés, de préférence comprise entre 140 et 170 degrés, par exemple égale à 150 degrés,
   les emplacements angulaires (4) des têtes de lecture (1a, 1b, 1c, 1d) étant en particulier choisis de telle sorte qu'au moins une des distances angulaires entre des têtes de lecture (1a, 1b, 1c, 1d) respectivement voisines se distingue d'au moins une des N-1 distances angulaires restantes, et sont respectivement adaptées pour la détection au moins partielle du code de position de telle sorte qu'une valeur de position angulaire absolue de la tête de lecture (1a, 1b, 1c, 1d) respective relativement au support de code peut être définie, et le support de code pouvant tourner par rapport aux têtes de lecture (1a, 1b, 1c, 1d), et différentes situations angulaires du support de code par rapport aux têtes de lecture (1a, 1b, 1c, 1d) pouvant ainsi être adoptées et
- avec une unité d'analyse destinée à la réalisation d'étapes suivantes du procédé d'étalonnage selon l'une des revendications 1 à 10 :

   ◦ définition de l'erreur angulaire (22) par la comparaison de la différence des valeurs de position angulaire des têtes de lecture (1a, 1b, 1c, 1d) avec l'emplacement angulaire (4) connu des têtes de lecture (1a, 1b, 1c, 1d) les unes par rapport aux autres ;
   ◦ répétition de la définition (23) des valeurs de position angulaire et de l'erreur angulaire pour une multiplicité de situations angulaires variables ;
   ◦ réalisation d'une méthode d'analyse (24) mathématique avec

   ◦ une définition des paramètres d'une fonction mathématique quantifiant les erreurs angulaires,
   ◦ une définition de paramètres d'étalonnage (40) en tant que paramètres de la fonction mathématique de quantification ou en tant que tableau de correction ou de code qui est dérivé des paramètres ;

   et/ou au moins d'étapes suivantes du procédé de mesure angulaire selon l'une des revendications 11 à 13 :

   ◦ définition de la valeur de mesure angulaire (32) par la correction de la valeur de position angulaire à l'aide de paramètres d'étalonnage (40) définis dans le cadre du procédé d'étalonnage selon l'une des revendications 1 à 10 ;
   ◦ fourniture de la valeur de mesure angulaire (33).

15. Produit de programme d'ordinateur qui est enregistré sur un support lisible par une machine, ou signal de données d'ordinateur, matérialisé par une onde électromagnétique, avec un code de programme destiné à la réalisation des étapes suivantes du procédé d'étalonnage selon l'une des revendications 1 à 10 :

   ◦ définition de l'erreur angulaire (22) par comparaison de la différence des valeurs de position angulaire des têtes de lecture (1a, 1b, 1c, 1d) avec l'emplacement angulaire (4) connu des têtes de lecture (1a, 1b, 1c, 1d) entre elles, les emplacements angulaires (4) des têtes de lecture (1a, 1b, 1c, 1d) étant en particulier choisis de telle sorte qu'au moins une des distances angulaires entre des têtes de lecture (1a, 1b, 1c, 1d) respectivement voisines se distingue d'au moins une des N-1 distances angulaires restantes ;
∘ répétition de la définition (23) des valeurs de position angulaire et de l'erreur angulaire pour une multiplicité de situations angulaires variables ;
∘ réalisation d'une méthode d'analyse (24) mathématique avec

∘ une définition des paramètres d'une fonction mathématique quantifiant les erreurs angulaires,
∘ une définition de paramètres d'étalonnage (40) en tant que paramètres de la fonction mathématique de quantification ou en tant que tableau de correction ou de code qui est dérivé à partir des paramètres ;

et/ou d'au moins d'étapes suivantes du procédé de mesure angulaire selon l'une des revendications 11 à 13 :

∘ définition de la valeur de mesure angulaire (32) par la correction de la valeur de position angulaire à l'aide de paramètres d'étalonnage (40) définis dans le cadre du procédé d'étalonnage selon l'une des revendications 1 à 10 ;

∘ fourniture de la valeur de mesure angulaire (33) ;

en particulier quand le programme est exécuté dans une unité d'analyse d'un système de mesure angulaire (7).

Fig. 1a

| h | a/A (Δ=150°) |
|---|---|
| 1 | 97% |
| 2 | 50% |
| 3 | 71% |
| 4 | 87% |
| 5 | 26% |
| 6 | 100% |
| 7 | 26% |
| 8 | 87% |
| 9 | 71% |
| 10 | 50% |
| 11 | 97% |
| 12 | 0% |
| 13 | 97% |

Fig. 1b

EP 2 504 666 B1

Fig. 2

Fig. 3a

Fig. 3b

Fig. 4

Fig. 5

Fig. 6b

Fig. 6a

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0440833 B1
- DE 112006003663 T5
- EP 1944582 A1
- DE 10357602 A1


**In der Beschreibung aufgeführte Nicht-Patentliteratur**

- **TSUKASA WATANBE.** Self Calibrationg Rotary Encoder. *Journal of Physics,* 2005, 240-245
- Measurement Science and Technology. **R. PROBST.** Selfcalibration of divided circles on the basis of a prime factor algorithm. 2008